# EUROPÄISCHE PATENTSCHRIFT

(11) **EP 1 158 858 B1**
(45) Veröffentlichungstag und Bekanntmachung des Hinweises auf die Patenterteilung: **07.04.2004**
(21) Anmeldenummer: 00906217.5
(22) Anmeldetag: 22.01.2000
(51) Int. Cl.: A01N 47/38, A01N 47/34, A01N 47/36, A01N 25/30, C11D 1/60

(54) **FORMULIERUNG VON HERBIZIDEN UND PFLANZENWACHSTUMSREGULATOREN**
FORMULATION OF HERBICIDES AND PLANT GROWTH REGULATORS
FORMULATION D'HERBICIDES ET REGULATEURS DE CROISSANCE POUR VEGETAUX

(30) Priorität: 27.01.1999 DE 19903064; 28.12.1999 DE 19963383
(43) Veröffentlichungstag der Anmeldung: 05.12.2001
(73) Patentinhaber: Aventis CropScience GmbH, 65929 Frankfurt am Main (DE)
(72) Erfinder: SCHNABEL, Gerhard, D-63820 Elsenfeld (DE); HAASE, Detlev, D-65929 Frankfurt (DE); MAIER, Thomas, D-65719 Hofheim (DE); MARTINEZ DE UNA, Julio, D-65835 Liederbach (DE); WÜRTZ, Jochen, D-55411 Bingen am Rhein (DE)
(86) Internationale Anmeldenummer: PCT/EP2000/000469
(87) Internationale Veröffentlichungsnummer: WO 2000/044227

(56) Entgegenhaltungen:
- EP-A- 0 052 856
- EP-A- 0 378 092
- EP-A- 0 469 460
- WO-A-97/32875
- WO-A-97/40021
- DE-A- 2 609 105
- US-A- 4 240 982

## Beschreibung

Die Erfindung betrifft das technische Gebiet der Formulierung von Herbiziden und Pflanzenwachstumsregulatoren, insbesondere von Herbiziden zur Bekämpfung von unerwünschtem Pflanzenwuchs, z.B. von Unkräutern und Ungräsem in Nutzpflanzenkulturen.

Es ist bekannt, daß Sulfonylhamstoffe herbizide und pflanzenwachstumsregulierende Eigenschaften besitzen. Für den Einsatz im agrochemischen Bereich werden die Sulfonylharnstoffe üblicherweise formuliert. Dabei ist die chemische Stabilität und die Wirkstoffkonzentration in der Formulierung von Bedeutung für deren Wirksamkeit. Aus EP-A-0 378 092, EP-A-0 469 460, WO 97/40021, WO 97/32875 und EP-A-0 052 856 sind Sulfoniumsalze und z.T. auch Phosphoniumsalze spezieller Sulfonylharnstoffe bekannt.

Überraschenderweise wurde nun gefunden, daß Formulierungen auf Basis von bestimmten Sulfonylharnstoffsalzen ausgezeichnete Eigenschaften aufweisen.

Gegenstand der vorliegenden Erfindung sind daher Formulierungen, insbesondere agrochemische, z.B. herbizide Formulierungen enthaltend
a) mindestens ein Phosphonium- oder Sulfoniumsalz eines Sulfonylharnstoffs, wobei das Phosphonium- und Sulfoniumkation des Salzes mindestens einen Substituenten aufweist, der von Wasserstoff verschieden ist, und
b) übliche Hilfs- und Zusatzstoffe.

In einer bevorzugten Ausführungsvariante betrifft die vorliegende Erfindung Formulierungen, insbesondere emulgierbare Konzentrate (EC), enthaltend mindestens ein primäres, sekundäres, tertiäres oder quartäres, vorzugsweise ein quartäres Phosphoniumsalz oder mindestens ein primäres, sekundäres oder tertiäres, vorzugsweise ein tertiäres Sulfoniumsalz eines Sulfonylhamstoffs.

Bevorzugt sind Formulierungen, enthaltend ein Sulfonylhamstoffsalz der Formel (la), 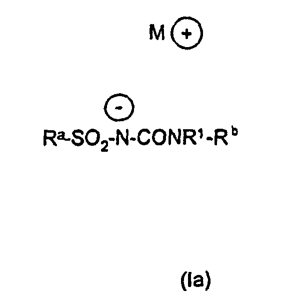 worin R^{a} ein substituierter aliphatischer, aromatischer oder heterocyclischer Rest oder eine elektronenziehende Gruppe wie ein substituierter Sulfonamidrest ist, vorzugsweise ist
R^{a} ein Rest der Formel II-IVc, 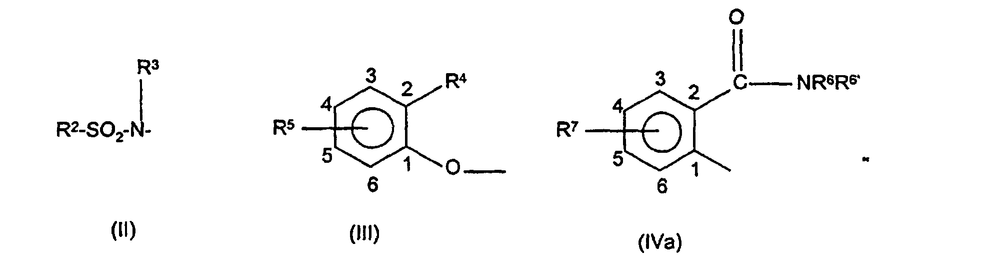 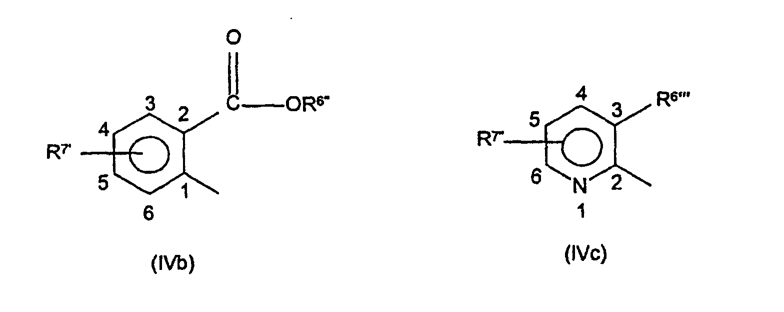 R^{b} ein Heteroyclylrest ist, vorzugsweise ein stickstoffhaltiger Heteroyclylrest, besonders bevorzugt ein Heteroyclyrest mit 2 oder 3 Stickstoffatomen im Ring, ganz besonders bevorzugt ein Rest 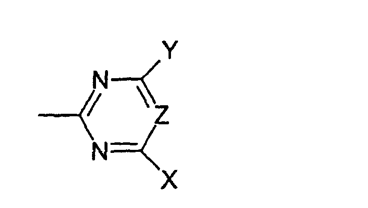 worin
R¹ H oder ein C₁-C₁₀-Kohlenwasserstoffrest wie (C₁-C₆)-Alkyl ist,
R² ein substituierter oder unsubstituierter C₁-C₂₀-Kohlenwasserstoffrest wie substituiertes oder unsubstituiertes (C₁-C₆)-Alkyl, substituiertes oder unsubstituiertes (C₂-C₆)-Alkenyl), substituiertes oder unsubstituiertes (C₂-C₆)-Alkinyl), substituiertes oder unsubstituiertes (C₃-C₇)-Cycloalkyl ist,
R³ ein substituierter oder unsubstituierter C₁-C₂₀-Kohlenwasserstoffrest wie substituiertes oder unsubstituiertes (C₁-C₆)-Alkyl, substituiertes oder unsubstituiertes (C₂-C₆)-Alkenyl), substituiertes oder unsubstituiertes (C₂-C₆)-Alkinyl), substituiertes oder unsubstituiertes (C₃-C₇)-Cycloalkyl ist,
R⁴ Halogen wie F, Cl, Br, J oder ein substituierter oder unsubstituierter C₁-C₂₀-Kohlenwasserstoffrest oder C₁-C₂₀-Kohlenwasserstoffoxyrest wie (C₁-C₆)-Alkyl, (C₂-C₆)-Alkenyl), (C₂-C₆)-Alkinyl), (C₁-C₆)-Alkoxy), (C₃-C₆)-Alkenyloxy), (C₃-C₆)-Alkinyloxy), wobei die letztgenannten 6 Reste durch einen oder mehrere Reste bevorzugt aus der Gruppe Halogen wie F,Cl, Br oder J oder (C₁-C₃)-Alkoxy substituiert sein können, ist,
R⁵ H, Halogen wie F, Cl, Br, J oder ein substituierter oder unsubstituierter C₁-C₂₀-Kohlenwasserstoffrest oder C₁-C₂₀-Kohlenwasserstoffoxyrest wie (C₁-C₆)-Alkyl, das durch ein oder mehrere Reste aus der Gruppe Halogen wie F,Cl, Br oder J oder (C₁-C₃)-Alkoxy substituiert sein kann oder (C₁-C₅)-Alkoxy, das durch ein oder mehrere Reste aus der Gruppe Halogen (F,Cl, Br, J) oder (C₁-C₃)-Alkoxy substituiert sein kann, ist R⁶ und R^{6'} gleich oder verschieden H oder ein substituierter oder unsubstituierter C₁-C₂₀-Kohlenwasserstoffrest wie C₁-C₆-Alkyl (z.B. Me, Et, ⁿPr,ⁱPr, ^{c}Pr) sind, wobei R⁶ und R^{6'} einen Ring bilden können, der unsubstituiert oder substituiert ist,
R⁷ H, Halogen wie F, Cl, Br oder J, OH, NR^{x}R^{y}, worin R^{x} und R^{y} H oder (C₁-C₃)-Alkyl sind, oder R⁷N-(C₁-C₃)-Alkyl-N-Acylamino oder N-Acylamino oder ein substituierter oder unsubstituierter C₁-C₂₀-Kohlenwasserstoffrest oder Kohlenwasserstoffoxyrest wie (C₁-C₃)-Alkyl, (C₁-C₃)-Haloalkyl, Halogen, , (C₁-C₃)-Alkyl-(N-(C₁-C₃)-Alkyl-N-Acylamino), (C₁-C₃)-Alkyl-(N-Acylamino) oder (C₁-C₃)-Alkoxy ist,
R^{6"} ein substituierter oder unsubstituierter C₁-C₂₀-Kohlenwasserstoffrest wie substituiertes oder unsubstituiertes (C₁-C₆)-Alkyl, substituiertes oder unsubstituiertes (C₃-C₆)-Alkenyl, substituiertes oder unsubstituiertes (C₃-C₆)-Cycloalkyl, substituiertes oder unsubstituiertes (C₃-C₇)-Alkinyl, substituiertes oder unsubstituiertes (C₄-C₈)-Cycloalkylalkyl, ist,
R^{7'} H, Halogen wie F, Cl, Br oder J, OH, NR^{x}R^{y}, worin R^{x}und R^{y} H oder (C₁-C₃)-Alkyl sind, oder R^{7'} N-(C₁-C₃)-Alkyl-N-Acylamino, N-Acylamino oder ein substituierter oder unsubstituierter C₁-C₂₀-Kohlenwasserstoffrest oder C₁-C₂₀-Kohlenwasserstoffoxyrest wie (C₁-C₃)Alkyl, (C₁-C₃)-Haloalkyl, (C₁-C₃)-Alkyl-(N-(C₁-C₃)-Alkyl-N-Acylamino), (C₁-C₃)Alkyl-(N-Acylamino) oder (C₁-C₃)-Alkoxy ist,
R^{6'"} Halogen wie F, Cl, Br oder J oder ein substituierter oder unsubstituierter C₁-C₂₀-kohlenstoffhaltiger Rest wie (C₁-C₆)-Alkyl, das durch ein oder mehrere Reste aus der Gruppe Halogen (F, Cl, Br, J) oder (C₁-C₃)-Alkoxy substituiert sein kann, (C₁-C₆)-Alkoxy, das durch ein oder mehrere Reste aus der Gruppe Halogen (F, Cl, Br, J) oder (C₁-C₃)-Alkoxy substituiert sein kann, substituiertes oder unsubstituiertes Alkoxycarbonyl, substituiertes oder unsubstituiertes Dialkylamino-Carbonyl, substituiertes oder unsubstituiertes (C₁-C₆)-Alkylsulfonyl, (C₁-C₆-Mono- oder dialkylamino, N-(C₁-C₆)-Alkyl-N-acylamino oder N-Acylamino, ist,
R^{7"} H, Halogen wie F, Cl, Br, J, OH, NR^{x}R^{y}, worin R^{x} und R^{y} H oder (C₁-C₃)-Alkyl sind, oder R^{7"} ein substituierter oder unsubstituierter C₁-C₂₀-Kohlenwasserstoffrest oder Kohlenwasserstoffoxyrest wie (C₁-C₆)-Alkyl, (C₁-C₆)-Haloalkyl, (C₁-C₆)-Alkoxy oder (C₁-C₆)-Haloalkoxy ist,
M+ ein quartäres Phosphoniumion oder ein tertiäres Sulfoniumion ist,
X substituiertes oder unsubstituiertes (C₁-C₆)-Alkyl, substituiertes oder unsubstituiertes (C₁-C₆)-Alkoxyl, Halogen wie F, Cl, Br oder J, substituiertes oder unsubstituiertes (C₁-C₆)Mercapto-alkyl oder (C₁-C₃)-Mono- oder (C₁-C₃)-Dialkylamino ist,
Y substituiertes oder unsubstituiertes (C₁-C₆)-Alkyl, substituiertes oder unsubstituiertes (C₁-C₆)-Alkoxyl, Halogen wie F, Cl, Br oder J, substituiertes oder unsubstituiertes (C₁-C₆)-Mercapto-alkyl oder (C₁-C₃)-Mono- oder (C₁-C₃)-Dialkylamino, ist, und
Z C-Halogen wie CF, CCl, CBr oder CJ, CH oder N ist.

Die Sulfonylharnstoffsalze der Formel (la) sind neu und ebenfalls Gegenstand dieser Erfindung.

In der Formel (la) sowie den anderen in dieser Anmeldung verwendeten Formeln können die Reste Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Alkylreste, auch in den zusammengesetzten Bedeutungen wie Alkoxy, Haloalkyl usw., bedeuten z. B. Methyl, Ethyl, n- oder 1-Propyl, n-, i-, t- oder 2-Butyl, Pentyl, Hexyl, wie n-Hexyl, i-Hexyl und 1,3-Dimethylbutyl, Heptyl, wie n-Heptyl, 1-Methylhexyl und 1,4-Dimethylpentyl; Alkenyl- und Alkinylreste haben die Bedeutung der den Alkylresten entsprechenden möglichen ungesättigten Reste, Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Die in dieser Anmeldung verwendeten Abkürzungen haben folgende Bedeutung: Me = Methyl, Et = Ethyl, Pr = Propyl, Bu = Butyl, ⁿPr = n-Propyl, ⁱPr = iso-Propyl, ^{c}Pr = Cyclopropyl, ⁿBu = n-Butyl, ⁱBu = iso-Buty), ^{s}Bu = sekundäres Butyl, ^{t}Bu = tertiäres Butyl, ^{c}Bu = Cyclobutyl, Ph = Phenyl.

Halogen bedeutet beispielsweise Fluor, Chlor, Brom oder lod. Haloalkyl, -alkenyl und - alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatome und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Hereoatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Dioxolanyl, Morpholinyl, Tetrahydrofuryl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste, wie substituierte Kohlenwasserstoffreste, z.B. substituiertes Alkyl, Alkenyl, Alkinyl, Aryl, Phenyl und Benzyl, oder substituiertes Heteroaryl, ein substituierter bicyclischer Rest oder Ring oder ein substituierter bicyclischer Rest, gegebenenfalls mit aromatischen Anteilen, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Cyano, Azido, Alkoxycarbonyl, Alkylcarbonyl, Formyl, Carbamoyl; Mono- und Dialkylaminocarbonyl, substituiertes Amino wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt.

Mono- und disubstituiertes Amino bedeutet z. B. Alkylamino, Dialkylamino, Acylamino, Arylamino, N-Aryl-N-alkylamino.

Ein Acylrest bedeutet den Rest einer organischen Säure, z. B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestern, gegebenenfalls N-substituierter Carbaminsäure, Sulfonsäuren, Sulfinsäuren, Phosphonsäuren, Phosphinsäuren. Acyl bedeutet beispielsweise Formyl, Alkylcarbonyl wie (C₁-C₄-Alkyl)-carbonyl, Phenylcarbonyl, wobei der Phenylring substituiert sein kann, z.B. wie oben für Phenyl gezeigt, oder Alkyloxycarbonyl, Phenyloxycarbonyl, Benzyloxycarbonyl, Alkylsulfonyl, Alkylsulfinyl, N-Alkyl-1-iminoalkyl und andere Reste von organischen Säuren.

Von der Formel (Ia) sind auch alle Stereoisomeren der Formel (Ia) umfaßt, sowie deren Gemische. Solche Verbindungen der Formel (la) enthalten ein oder mehrere asymmetrische C-Atome oder auch Doppelbindungen, die in der allgemeinen Formel (Ia) nicht gesondert angegeben sind. Die durch ihre spezifische Raumform definierten möglichen Stereoisomeren, wie Enantiomere, Diastereomere, Z- und E-Isomere sind alle von den Formeln (Ia) umfaßt und können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Von besonderem Interesse sind Formulierungen, enthaltend Sulfonylharnstoff-Salze der Formel (la), worin
R¹ H oder Me,
R² (C₁-C₃)-Alkyl oder (C₁-C₃)-Haloalkyl, insbesondere Me und Et,
R³ (C₁-C₃)-Alkyl oder (C₁-C₃)-Haloalkyl, insbesondere Me und Et,
R⁴ (C₁-C₆)-Alkyl, (C₁-C₆)-Haloalkyl oder (C₁-C₆)-Alkoxy, insbesondere Me, Et, OMe, OEt oder CF₃,
R⁵ H, Halogen wie F, Cl, Br oder J, OMe, OEt, Me, CF₃, wobei die von Wasserstoff verschiedenen Reste R⁵ in Formel (III) bevorzugt in der 5-Position am Phenylring stehen,
R⁶ und R^{6'} gleich oder verschieden C₁-C₆-Alkyl sind, vorzugsweise R⁶ = Me, R^{6,} = Me; R⁶ = Me, R^{6,} = Et und R^{6'} = Et, R⁶ = Et.
R⁷ H, Me, Et, CF₃, F, Cl, Br, J, N[(C₁-C₃)-Alkyl]-R⁸, NH-R⁹, CH₂N[(C₁-C₃)-Alkyl]-R¹⁰, CH²NH-R¹¹, CH₂CH₂N[(C₁-C₃)-Alkyl]-R¹², CH₂CH₂NH-R¹³, wobei die von Wasserstoff verschiedenen Reste R⁷ in Formel (IVa) bevorzugt in der 5-Position am Phenylring stehen, und die Reste R⁸ bis R¹³ H, (C₁-C₆)-Alkyl, (C₁-C₆)- Haloalkyl, CHO, COO(C₁-C₆)-Alkyl, COO(C₁-C₆)-Haloalkyl, SO₂-(C₁-C₆)-Alkyl, SO₂-(C₁-C₆)-Haloalkyl, CO-(C₁-C₆)-Alkyl oder CO-(C₁-C₆)-Haloalkyl bedeuten, R^{6"} Me, Et, ⁿPr, ⁱPr, ^{c}Pr, ⁿBu, ⁱBu, ^{s}Bu, ^{t}Bu, ^{c}Bu, insbesondere Me oder Et
R^{7'} H, Me, Et, CF_{3,} F, Cl, Br, I, N[(C₁-C₃)-Alkyl]-R⁸, NH-(C₁-C₃)-Alkyl, CH₂N[(C₁-C₃)-Alkyl]-R¹⁰, CH₂NH-R¹¹, CH₂CH₂N[(C₁-C₃)-Alkyl]-R¹², CH₂CH₂NH-R¹³, wobei die von Wasserstoff verschiedenen Reste R^{7'} in Formel (IVb) bevorzugt in der 5-Position am Phenyiring stehen, und die Reste R⁸ und R¹⁰ bis R¹³ H, (C₁-C₆)-Alkyl, (C₁-C₆)- Haloalkyl, CHO, COO(C₁-C₆)-Alkyl, COO(C₁-C₆)-Haloalkyl, SO₂-(C₁-C₆)-Alkyl, SO₂-(C₁-C₆)-Haloalkyl, CO-(C₁-C₆)-Alkyl oder CO-(C₁-C₆)-Haloalkyl bedeuten,
R^{6'"} Me, Et, Pr, CH₂CH₂CF₃, OMe, OEt, OⁱPr, OCH₂CH₂Cl, F, Cl, COOMe, COOEt, COOⁿPr, COO'Pr, CONMe₂, CONEt₂, SO₂Me, SO₂Et, SO₂ⁱPr, unsubstituiertes oder substituiertes NH-(C₁-C₆)-Alkyl-Acyl, unsubstituiertes oder substituiertes NH-(C₃-C₇)-Cycloalkyl, unsubstituiertes oder substituiertes (C₄-C₈)-Cycloalkylalkyl, unsubstituiertes oder substituierters N-(C₃-C₇)-Cycloalkyl-Aryl, unsubstituiertes oder substituiertes N-(C₄-C₈)-Cycloalkylalky-Acyl, vorzugsweise N-(C₁-C₆)-Alkyl-CHO, N-(C₁-C₆)-Alkyl-CO-R, N-(C₁-C₆)-Alkyl-SO₂R, NH-CHO, NH-CO-R, NHSO₂R, wobei die Reste R (C₁-C₆)-(Halo)-Alkyl, (C₁-C₆)-(Halo)-Alkoxy, (C₁-C₃)-Alkoxy-(C₁-C₆)-Alkyl, (C₁-C₃)-Alkoxy-(C₁-C₆)-Alkoxy oder Mono- und Di-(C₁-C₆)-Alkylamino,
R^{7''} H, F, Cl, Me, Et, CF_{3,} OCH_{3,} OEt, OCH₂CF_{3,} vorzugsweise H ist,
M⁺ [SR¹⁸R¹⁹R²⁰]⁺ oder [PR²¹R²²R²³R²⁴]⁺ ist, wobei
und R¹⁸ bis R²⁵ gleich oder voneinander verschieden substituiertes oder unsubstituiertes (C₁-C₃₀)-Alkyl, substituiertes oder unsubstituiertes (C₁-C₁₀)-Alkyl-(Hetero)-aryl, substituiertes oder unsubstituiertes (C₃-C₃₀)-(Oligo)-Alkenyl, substituiertes oder unsubstituiertes (C₃-C₁₀)-(Oligo)-Alkenyl-(Hetero)-Aryl, substituiertes oder unsubstituiertes (C₃-C₃₀)-(Oligo)-Alkinyl, substituiertes oder unsubstituiertes (C₃-C₁₀)-(Oligo)-Alkinyl-(Hetero)-Aryl, substituiertes oder unsubstituiertes (Hetero)-Aryl sind, und wobei zwei Reste R¹⁸/R¹⁹, R²¹/R²² und R²³/R²⁴ zusammen einen unsubstituierten oder substituierten Ring bilden können,
X Me, Et, Pr, iPr, CF₃, CCl₃, OMe, OEt, OⁱPr, OCHCl₂, OCH₂CCl₃, OCH₂CF₃, F, Cl, Br, SMe, SEt, NHMe, NMe₂, NHEt, vorzugsweise OMe, OEt, Me, Cl
Y Me, Et, Pr, ⁱPr, CF₃, CCl₃, OMe, OEt, OⁱPr, OCHCl₂, OCH₂CCl₃, OCH₂CF₃, F, Cl, Br, SMe, SEt, NHMe, NMe₂, NHEt, vorzugsweise OMe, OEt, Me, Cl
und
Z CH und N
bedeuten.

Geeignete Kationen M⁺ sind auch cyclische Kationen der Formel
[SR¹⁸R¹⁹R²⁰]⁺ oder [PR²¹R²²R²³R²⁴]⁺,
worin zwei Reste R¹⁸/R¹⁹, R²¹/R²² oder R²³/R²⁴ zusammen einen unsubstituierten oder substituierten Ring bilden.

Beispielsweise können R¹⁸/R¹⁹ zusammen mit dem ladungstragenden Schwefelatom einen heterozyklischen Ring bilden, wie z.B. in den Formeln X-XII dargestellt, 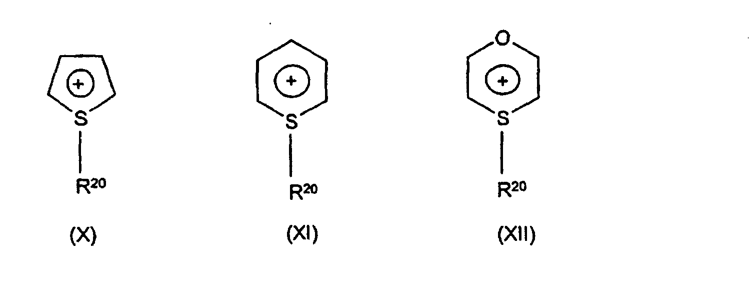 oder
R²¹/R²² bilden zusammen mit dem ladungstragenden Phosphoratom einen heterozyklischen Ring, wie z.B. in den Formeln Xa-XIIa dargestellt,

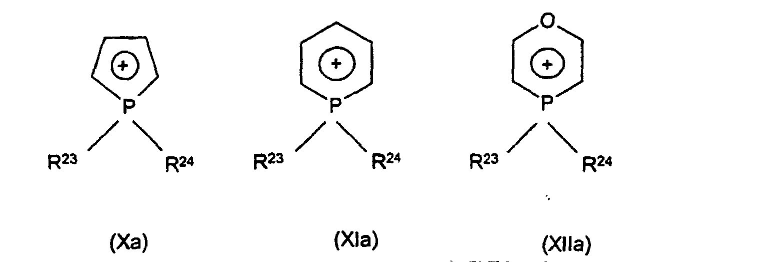

Bevorzugte Kationen M^{⊕} sind dadurch gekennzeichnet, daß die Reste
R¹⁸ bis R²⁴ gleich oder voneinander verschieden (C₁-C₂₂)-Alkyl, unsubstituiert oder substituiert durch einen oder mehrere Reste der Gruppe (C₁-C₅)-Alkyl, (C₁-C₅)-Alkoxy, (C₁-C₅)-Haloalkoxy, Halogen, wie Fluor, Chlor, Brom und Jod, O-(CH₂-CH₂-O)ₓH, O-(CH₂-CH₂-O)ₓ-(C₁-C₃)-Alkyl, O-(CH₂-CH₂-O)ₓ-(CO)-(C₁-C₃)alkyl oder O-(CH₂-CH₂-O)ₓ-(CO)-(C₁-C₃)-alkoxy,
Phenyl, unsubstituiert oder substituiert durch einen oder mehrere Reste der Gruppe (C₁-C₅)-Alkyl, (C₁-C₅)-Alkoxy, (C₁-C₅)-Haloalkoxy, Halogen, wie Fluor, Chlor, Brom und Jod, O-(CH₂-CH₂-O)ₓH, O-(CH₂-CH₂-O)ₓ-(C₁-C₃)-Alkyl, O-(CH₂-CH₂-O)ₓ-(CO)-(C₁-C₃)-alkyl, O-(CH₂-CH₂-O)ₓ(CO)-(C₁-C₃)-alkoxy, C₁-C₁₀-Alkyl, das ebenfalls durch einen der Reste O-(CH₂-CH₂)ₓ-OH, O-(CH₂-CH₂)ₓ-O-(C₁-C₃)-Alkyl, O-(CH₂CH₂-O)ₓ-(CO)-(C₁-C₃)-alkyl, oder O-(CH₂-CH₂-O)ₓ-(CO)-(C₁-C₃)-alkoxy, substituiert sein kann,
(C₃-C₂₂)Alkenyl, unsubstituiert oder substituiert durch einen oder mehrere Reste aus der Gruppe (C₁-C₅)-Alkyl, (C₁-C₅)-Alkoxy, (C₁-C₅)-Haloalkoxy, Halogen, wie Fluor, Chlor, Brom und Jod, O-(CH₂-CH₂-O)ₓH, O-(CH₂CH₂-O)ₓ-(C₁-C₃)-Alkyl, O-(CH₂-CH₂-O)ₓ-(CO)-(C₁-C₃)-alkyl oder O-(CH₂CH₂-O)ₓ-(CO)-(C₁-C₃)-alkoxy, und wobei der Alkenyl-Rest einfach oder mehrfach ungesättigt ist, bevorzugt jedoch zwischen einer und drei Doppelbindungen trägt,
(C₃-C₂₂)-Alkinyl, unsubstituiert oder substituiert durch einen oder mehrere Reste aus der Gruppe (C₁-C₅)-Alkyl, (C₁-C₅)-Alkoxy, (C₁-C₅)-Haloalkoxy, Halogen, wie Fluor, Chlor, Brom und Jod, O-(CH₂-CH₂-O)ₓH, O-(CH₂-CH₂-O)ₓ-(C₁-C₃)Alkyl, O-(CH₂-CH₂)ₓ-(CO)-(C₁-C₃)-alkyl oder O-(CH₂-CH₂-O)ₓ-(CO)-(C₁-C₃)-alkoxy, und wobei der Alkinyl-Rest einfach oder mehrfach ungesättigt ist, bevorzugt jedoch zwischen einer und drei Dreifachbindungen trägt,
wobei x eine ganze Zahl von 1 bis 40 ist,
bedeuten.

Besonders bevorzugt sind Kationen M⁺, bei denen
R¹⁸ bis R²⁴ gleich oder voneinander verschieden (C₁-C₂₂)Alkyl, unsubstituiert oder substituiert durch einen oder mehrere Reste der Gruppe (C₁-C₅)-Alkyl, (C₁-C₅)-Alkoxy, (C₁-C₅)-Haloalkoxy, Halogen, wie Fluor, Chlor, Brom und Jod, O-(CH₂-CH₂-O)ₓH, O-(CH₂-CH₂-O)ₓ-(C₁-C₃)-Alkyl, O-(CH₂-CH₂-O)ₓ-(CO)-(C₁-C₃)-alkyl oder O-(CH₂-CH₂-O)ₓ-(CO)-(C₁-C₃)-alkoxy,
Phenyl, unsubstituiert oder substituiert durch einen oder mehrere Reste der Gruppe (C₁-C₅)-Alkyl, (C₁-C₅)-Alkoxy, (C₁-C₅)-Haloalkoxy, Halogen, wie Fluor, Chlor, Brom und Jod, O-(CH₂-CH₂-O)ₓH, O-(CH₂-CH₂-O)ₓ-(C₁-C₃)-Alkyl, O-(CH₂-CH₂-O)ₓ-(CO)-(C₁-C₃)-alkyl, O-(CH₂-CH₂-O)ₓ-(CO)-(C₁-C₃)-alkoxy, C₁-C₁₀-Alkyl, das ebenfalls durch einen der Reste O-(CH₂-CH₂)ₓ-OH, O-(CH₂-CH₂)ₓ-O-(C₁-C₃)-Alkyl, O-(CH₂-CH₂-O)ₓ-(CO)-(C₁-C₃)-alkyl, oder O-(CH₂CH₂-O)ₓ-(CO)-(C₁-C₃)-alkoxy, substituiert sein kann,
(C₃-C₂₂)-Alkenyl, unsubstituiert oder substituiert durch einen oder mehrere Reste aus der Gruppe (C₁-C₅)-Alkyl, (C₁-C₅)Alkoxy, (C₁-C₅)-Haloalkoxy, Halogen, wie Fluor, Chlor, Brom und Jod, O-(CH₂-CH₂₋O)ₓH, O-(CH₂-CH₂-O)ₓ-(C₁-C₃)-Alkyl, O-(CH₂-CH₂-O)ₓ-(CO)-(C₁-C₃)-alkyl oder O-(CH₂-CH₂-O)ₓ-(CO)-(C₁-C₃)-alkoxy, und wobei der Alkenly-Rest einfach oder mehrfach ungesättigt, ist bevorzugt jedoch zwischen einer und drei Doppelbindungen trägt,
(C₃-C₂₂)-Alkinyl, unsubstituiert oder substituiert durch einen oder mehrere Reste aus der Gruppe (C₁-C₅)-Alkyl, (C₁-C₅)-Alkoxy, (C₁-C₅)-Haloalkoxy, Halogen, wie Fluor, Chlor, Brom und Jod, O-(CH₂-CH₂-O)ₓH, O-(CH₂-CH₂-O)ₓ-(C₁-C₃)-Alkyl, O-(CH₂-CH₂O)ₓ-(CO)-(C₁-C₃)-alkyl oder O-(CH₂-CH₂-O)ₓ-(CO)(C₁-C₃)-alkoxy, und wobei der Alkinyl-Rest einfach oder mehrfach ungesättigt ist, bevorzugt jedoch zwischen einer und drei Dreifachbindungen trägt,
wobei x eine ganze Zahl von 1 bis 40 ist.

Die oben genannten Sulfonylhamstoffsalze, vorzugsweise der Formel (la), in Kombination mit Hilfsstoffen und Zusatzstoffen, eignen sich für die Herstellung von Formulierungen insbesondere für die Herstellung von EC-Formulierungen.

Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Öl-in-Wasser- und Wasser-in-Öl-Emulsionen, versprühbare Lösungen, Suspensionskonzentrate (SC), Dispersionen auf Öl- oder Wasserbasis, ölmischbare Lösungen, Kapselsuspensionen (CS), Stäubemittel (DP), Beizmittel, Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulate (SG), ULV-Formulierungen, Mikrokapseln und Wachse.
Diese einzelnen Formulierungstypen sind im Prinzip bekannt und werden beispielsweise beschrieben in: Winnacker Küchler, "Chemische Technologie", Band 7, C. Hauser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual''. MC Publ. Corp., Ridgewood N.J.; Sisley and Wood, "Encyclopedia of Surface Active Agents", Chem. Publ. Co. Inc., N.Y. 1964; Schönfeldt,"Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie z.B. Insektiziden, Akariziden, Herbiziden, Fungiziden, sowie mit Safenem wie 1-(2,4-Dichlorphenyl)-5-(ethoxycarbonyl)-5-methyl-2-pyrazolin-3-carbonsäureethylester (Mefenpyr) oder 5,5-Diphenyl-2-isoxazolin-carbonsäureethylester, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten. Zur Herstellung der Spritzpulver werden die herbiziden Wirkstoffe beispielsweise in üblichen Apparaturen wie Hammermühlen, Gebläsemühlen und Luftstrahlmühlen feingemahlen und gleichzeitig oder anschließend mit den Formutierungshilfsmitteln vermischt.

Emulgierbare Konzentrate werden durch Auflösen des Wirkstoffes in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze wie Ca-dodecylbenzolsulfonat oder nichtionische Emulgatoren wie Alkylarylpolyglykolether, die von para-Alkyl Phenol Ethoxylaten verschieden sind, Fettsäurepolyglykolester, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester wie z.B. Polyoxyethylensorbitanfettsäureester.

Stäubemittel erhält man durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührem, Kolloidmühlen und/oder statischen Mischern unter Verwendung von wäßrigen organischen Lösungsmitteln und gegebenenfalls Tensiden, wie sie z.B. oben bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Zucker wie Pentosen und Hexosen oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden.

Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt.

Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968. Seiten 101-103.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Neu und ebenfalls Gegenstand dieser Erfindung ist die Verwendung der Hilfsstoffe der Formel (XVIII) als Formulierungshilfsstoffe für agrochemische Formulierungen sowie deren Verwendung in der Synthese von Salzen von agrochemischen Wirkstoffen mit acidem Proton/aciden Protonen.

R-O(EO)_{w}(PO)ₓ(EO)_{y}(PO)_{z}^{⊖} M^{⊕} (XVIII)

Die Hilfsstoffe der Formel (XVIII) können als Reinsubstanz oder in Form eines festen oder flüssigen Gemisches eingesetzt werden. In der Formel (XVIII) können die Indizes w, x, y, z unabhängig voneinander einen ganzzahligen Wert von 0 bis 50 vorzugsweise 0 bis 20, besonders bevorzugt 1 bis 20 annehmen. Bei dem Rest R handelt es sich um einen unsubstituierten oder substituierten **C**_{**8**}**-C**_{**40**}-Kohlenwasserstoffrest z.B.: C₈-C₄₀-Alkyl-Rest. Dieser kann gesättigt oder ungesättigt, linear oder verzweigt sein. Als Substituenten kommen beispielsweise F, Cl, Br oder I oder eine Hydroxy- oder Aminogruppe in Frage. In dieser Definition ist auch die Substitution eines Kohlenstoffatoms der Alkylkette durch ein oder mehrere Sauerstoff- oder Stickstoffatome umfaßt. Bei M® handelt es sich um ein Phosphonium- oder Sulfoniumion oder um ein Metallkation wie z.B. ein Alkalimetallion wie Natrium- oder Kaliumion. EO bedeutet Ethoxyeinheit und PO bedeutet Propoxyeinheit.

Als Kombinationspartner für die Sulfonylharnstoffsalze in den erfindungsgemäßen Formulierungen sind beispielsweise. bekannte Wirkstoffe einsetzbar, wie sie z.B. aus Weed Research 26, 441-445 (1986) oder "The Pesticide Manual", 11th edition, The British Crop Protection Council and the Royal Soc. of Chemistry, 1997 und dort zitierter Literatur beschrieben sind. Als bekannte Herbizide, die mit den Sulfonylhamstoffsalzen kombiniert werden können, sind z.B. folgende Wirkstoffe zu nennen (AnmerKung: Die Verbindungen sind entweder mit dem "common name" nach der International Organization for Standardization (ISO) oder mit dem chemischen Namen, ggf. zusammen mit einer üblichen Codenummer bezeichnet): acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester, alachlor; alloxydim; ametryn; amidosulfuron; amitrol; AMS, d.h. Ammoniumsulfamat; anilofos; asulam; atrazin; azafenidin; azimsulfuron (DPX-A8947); aziprotryn; barban; BAS 516 H, d.h. 5-Fluor-2-phenyl-4H-3,1-benzoxazin-4-on; BAS 620 H; BAS 65400H; BAY FOE 5043; benazolin; benfluralin; benfuresate; bensulfuron-methyl; bensulide; bentazone; benzofenap; benzofluor; benzoylprop-ethyl; benzthiazuron; bialaphos; bifenox; bispyribac-Na; bromacil; bromobutide; bromofenoxim; bromoxynil; bromuron; buminafos; busoxinone; butachlor; butamifos; butenachlor; buthidazole; butralin; butroxydim; butylate; cafenstrole (CH-900); caloxydim; carbetamide; carfentrazone-ethyl; CDAA, d.h. 2-Chlor-N,N-di-2-propenylacetamid; CDEC, d.h. Diethyldithiocarbaminsäure-2-chlorallylester; chlomethoxyfen; chloramben; chlorazifop-butyl, chlorbromuron; chlorbufam; chlorfenac; chlorflurecol-methyl; chloridazon; chlorimuron ethyl; chlomitrofen; chlorotoluron; chloroxuron; chlorpropham; chlorsulfuron; chlorthal-dimethyl; chlorthiamid; cinmethylin; cinosulfuron; clethodim; clodinafop und dessen Esterderivate (z.B. clodinafop-propargyl); clomazone; clomeprop; cloproxydim; clopyralid; cloransulam-methyl; cumyluron (JC 940); cyanazine; cycloate; cyclosulfamuron (AC 104); cycloxydim; cycluron; cyhalofop und dessen Esterderivate (z.B. Butylester, DEH-112); cyperquat; cyprazine; cyprazole; daimuron; 2,4-DB; dalapon; desmedipham; desmetryn; di-allate; dicamba; dichlobenil; dichlorprop; diclofop und dessen Ester wie diclofop-methyl; diclosulam, d.h. N-(2,6-Dichlorphenyl)-5-ethoxy-7-fluor-[1,2,4]triazolo[1,5-c]pyrimidin-2-sulfonamid; diethatyl; difenoxuron; difenzoquat; diflufenican; diflufenzopyr (BAS 654 00H), dimefuron; dimethachlor; dimethametryn; dimethenamid (SAN-582H); dimethazone, clomazon; dimethipin; dimetrasulfuron, dinitramine; dinoseb; dinoterb; diphenamid; dipropetryn; diquat; dithiopyr; diuron; DNOC; eglinazine-ethyl; EL 77, d.h. 5-Cyano-1-(1,1-dimethylethyl)-N-methyl-1H-pyrazole-4-carboxamid; endothat; EPTC; esprocarb; ethalfluralin; ethametsulfuron-methyl; ethidimuron; ethiozin; ethofumesate; F5231, d.h. N-[2-Chlor-4-fluor-5-[4-(3-fluorpropyl)-4,5-dihydro-5-oxo-1H-tetrazol-1=yl]phenyl]-ethansulfonamid; ethoxyfen und dessen Ester (z.B. Ethylester, HN-252); etobenzanid (HW 52); fenoprop; fenoxan, fenoxaprop und fenoxaprop-P sowie deren Ester, z.B. fenoxaprop-P-ethyl und fenoxaprop-ethyl; fenoxydim; fenuron; flamprop-methyl; flazasulfuron; fluazifop und fluazifop-P und deren Ester, z.B. fluazifop-butyl und fluazifop-P-butyl; fluchloralin; flumetsulam; flumeturon; flumiclorac und dessen Ester (z.B. Pentylester, S-23031 ); flumioxazin (S-482); flumipropyn; flupoxam (KNW-739); fluorodifen; fluoroglycofen-ethyl; flupropacil (UBIC-4243); flupyrsulfuron-methyl-sodium; fluridone; flurochloridone; fluroxypyr; flurtamone; fluthiacet-methyl; fomesafen; fosamine; furyloxyfen; glufosinate; glyphosate; halosafen; halosulfuron und dessen Ester (z.B. Methylester, NC-319); haloxyfop und dessen Ester, haloxyfop-P (= R-haloxyfop) und dessen Ester; hexazinone; imazamethabenz-methyl; imazamox; imazapyr; imazaquin und Salze wie das Ammoniumsalz; imazethamethapyr; imazethapyr, imazosulfuron; indanofan (MK-243), iodosulfuron, ioxynil; isocarbamid; isopropalin; isoproturon; isouron; isoxaben; isoxaflutole; isoxapyrifop; karbutilate; lactofen; lenacil; linuron; MCPA; MCPB; mecoprop; mefenacet; mefluidid; metamitron; metazachlor; methabenzthiazuron; metham; methazole; methoxyphenone; methyldymron; metobenzuron; metobromuron; metolachlor, metosulam (XRD 511); metoxuron; metribuzin; metsulfuron-methyl; MH; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclophen; nitralin; nitrofen; nitrofluorfen; norflurazon; orbencarb; oryzalin; oxadiargyl (RP-020630); oxadiazon; oxasulfuron; oxaziclomefone (MY-100); oxyfluorfen; paraquat; pebulate; pendimethalin; pentoxazone (KPP-314); perfluidone; phenisopham; phenmedipham; picloram; piperophos; piributicarb; pirifenop-butyl; pretilachlor; primisulfuron-methyl; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prosulfuron (CGA-152005); prynachlor; pyroflufen-ethyl; pyrazolinate; pyrazon; pyrazosulfuron-ethyl; pyrazoxyfen; pyribenzoxim (LGC-40836); pyributicarb; pyridate; pyriminobac-methyl; pyrithiobac (KIH-2031); pyroxofop und dessen Ester (z.B: Propargylester); quinclorac; quinmerac; quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und - methylester; sulcotrione; sulfentrazon (FMC-97285, F-6285); sulfazuron; sulfometuron-methyl; sulfosate (ICI-A0224); sulfosulfuron; TCA; tebutam (GCP-5544); tebuthiuron; terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiazafluron; thiazopyr (Mon-13200); thidiazimin (SN-24085); thifensulfuron-methyl; thiobencarb; tiocarbazil; tralkoxydim; tri-allate; triasulfuron; triaziflam, triazofenamide; tribenuron-methyl; triclopyr; tridiphane; trietazine; trifluralin; triflusulfuron und Ester (z.B. Methylester, DPX-66037); trimeturon; tsitodef; vemolate; WL 110547, d.h. 5-Phenoxy-1-[3-(trifluormethyl)-phenyl)-1 H-tetrazol; JTC-101; UBH-509; D-489; LS 82-556; KPP-300; NC-324; NC-330; KH-218; DPX-N8189; SC-0774; DOWCO-535; DK-8910; V-53482; PP-600; MBH-001; KIH-9201; ET-751; KIH-6127 und KIH-2023.

Zur Anwendung werden die in handelsüblicher Form vorliegenden Formulierungen gegebenenfalls in üblicher Weise verdünnt z.B. bei Spritzpulvern, emulgierbaren Konzentraten, Dispersionen und wasserdispergierbaren Granulaten mittels Wasser.

Die erfindungsgemäßen Formulierungen enthalten in der Regel 0,1 bis 99 Gew.-%, insbesondere 0,1 bis 95 Gew.-%, Wirkstoff , vorzugsweise ein Sulfonylharnstoffsalz der Formel (la). In Spritzpulvem beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0,05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Staubförmige Formulierungen, Boden- bzw. Streugranulate sowie versprühbare Lösungen werden vor der Anwendung üblicherweise nicht mehr mit weiteren inerten Stoffen verdünnt.

Die erfindungsgemäßen EC-Formulierungen sind dadurch gekennzeichnet, daß der Anteil an Sulfonylharnstoffsalzen im allgemeinen 0,01-70 Gew.-%, vorzugsweise 0,1-70 Gew.-%, besonders vorzugsweise 0,1-50 Gew.-% beträgt. Daneben können weitere Agrochemikalien aus dem Bereich Pflanzenschutz -z.B.Herbizide, Fungizide, Insektizide, Wachstumsregulatoren, Safener oder Dünger- zwischen 0 bis 70 Gew.% enthalten sein. Es können auch zwischen 1 und 40 Gew.-%, vorzugsweise 2-40% eines Tensid-Systems enthalten sein. Das Tensid-System kann sich z. B. aus
a) einem oder mehreren nicht-ionischen Tensiden,
b) einem oder mehreren betainischen Tensiden,
c) einem oder mehreren anionischen Tensiden,
d) einem oder mehreren kationischen Tensiden,
   oder
e) einem Gemisch aus den unter a)-d) genannten Tensiden zusammensetzen.

In den EC-Formulierungen kann zwischen 0-und 95 Gew.-%, vorzugsweise zwischen 5 und 95 Gew.-% eines Lösungsmittelsystems enthalten sein. Geeignete Lösungsmittel sind beispielsweise
a) ein unpolares Solvens, z.B. aromatische Kohlenwasserstoffe wie Solvesso® , Ester von langkettigen gesättigten oder ungesättigten (Fett-)Säuren und/oder Alkoholen wie z.B. Rapsölmethylester, oder ein Gemisch aus unpolaren Solventien
b) ein polares protisches oder aprotisches Solvens wie z.B. Gamma-Butyrolacton, Propylencarbonat, Propionitril oder Methanol, Ethanol, oder auch Mischungen daraus
   oder
c) Mischungen aus den oben unter a) und b) genannten Lösemittelsystemen. Daneben können die erfindungsgemäßen EC-Formulierungen optional 3-90 Gew.-% eines Netzmittels, das bioaktivierende Eigenschaften haben kann, oder auch eine Mischung aus verschiedenen Netzmitteln, die bioaktivierende Eigenschaften haben können, enthalten.

Optional können weitere stabilisierende Verbindungen, z.B. ph-Wert stabilisierende Reagentien (z.B. PH 5-9), Substanzen mit entschäumenden Eigenschaften, Säuerfänger, Wasserfänger oder Kristallisationsinhibitoren enthalten sein.

Eine weitere Ausführungsform der erfindungsgemäßen Formulierungen kennzeichnet sich dadurch, daß es sich um eine Dispersion handelt, wobei die flüssige, homogene Phase wie voranstehend beschrieben aufgebaut ist und in die eine oder mehrere unlösliche Verbindungen dispergiert sind. Bei den unlösichen Stoffen kann es sich um Agrochemikalien, z.B. Herbizide, Insektizide, Fungizide, Safener oder Dünger handeln, oder auch um Formulierungshilfsstoffe, wie z.B. Tenside, die sich in der organischen Phase nicht lösen, wie z.B. Netzer IS (Fa. Clariant).

Die erfindungsgemäßen EC-Formulierungen sind bevorzugt dadurch gekennzeichnet, daß der Anteil an dem Sulfonylharnstoffsalz, insbesondere der Formel (la) oder dem Gemisch aus Sulfonylhamstoffsatzen im allgemeinen 0,1-70,0 Gew.-%, vorzugsweise 0,1 - 50,0 Gew.-% beträgt. Als geeignete Solventien eignen sich polare Solventien wie z.B. gamma-Butyrolacton, Acetonitril, Propionitril; ihr Anteil beträgt 5,0 -95,0 Gew.%. Um eine stabile Emulsion nach Zugabe in Wasser zu erhalten, sollte das fertige EC-Produkt einen Gewichtsanteil von 2,0-40,0 Gew.-% eines Gemisches aus einem anionischen und einem nicht-ionischen Surfactants oder eines gemisches aus kationischen und nicht-ionischen Surfactants enthalten. Daneben-können optional weitere Bestandteile zu denEC-Formutierungen zugesetzt werden: Durch Zugabe eines hydrophoben Solvens im Bereich von 1,0-90,0 Gew.-% kann die Emulsionsbildung im wäßrigen Spritzmischungen vorteilhaft beeinflußt werden. Als Lösungsmittelkomponenten eignet sich z.B. Rapsölmethylester, aromatische Solventien wie z.B. Solvesso, Ester von langkettigen Säuren und Alkoholen, oder auch Gemisch hydrophober Solventien.
Optional können die so beschriebenen EC-Formulierungen einen Anteil von 3,0-90,0 Gew.-% an einem Netzmittel, das bioaktivierende Eigenschaften haben kann, oder einem Gemisch aus Netzmitteln haben.
Agrochemische Kombinationspräparate können erhalten werden, indem agrochemische Wirkstoffe, die sich gegenüber Sulfonylhamstoffsalzen chemisch inert verhalten und in den für den erfindungsgemäßen Formulierungstyp typischen Solvenssystem gut löslich sind, im Bereich zwischen 20,0 - 50,0 Gew.-% zugesetzt werden. Dies ist für eine große Zahl von handelsüblichen Agrochemikalien der Fall. Optional können die erfindungsgemäßen Formulierungen auch Stabilisatoren enthalten, die z.B. den PH-Wert der Tankmischung zwischen 6 und 8 stabilisieren sollen.

Erfindungsgemäße EC-Formulierungen weisen vorzugsweise folgende Zusammensetzung auf:
1) der Gehalt an Sutfonythamstoffsatzen beträgt im allgemeinen 0,1 - 70,0 Gew.-%, vorzugsweise 0,1 - 50,0 Gew.-%; dabei können ein oder mehrere Wirkstoffe in der Formulierung enthalten sein
2) optional können weitere Agrochemikalien (Herbizide, Insektizide, Fungizide, Wachstumsregulatoren, Safener, Dünger) zwischen 0 bis 50,0 Gew.-% enthalten sein,
3) 5,0 - 95,0 Gew.-% eines polaren Solvens, wie z.B. Gamma-Butyrolacton, Acetonitril, Propionitril, Propylencarbonat, oder auch Mischungen davon enthalten sind
4) optional zwischen 1,0 - 90,0 Gew.-% eines hydrophoben Solvens, z.B. Rapsölmethylester, Aromatische Solventien, Ester von langkettigen Säuren und Alkoholen
5) 2,0 - 40,0 Gew.-% einer Mischung anionischer und nichtionischer Verbindungen enthalten sind oder
6) 2,0 - 40,0 Gew.-% einer Mischung kationischer und nichtionischer Verbindungen enthalten sind
7) optional 3,0 - 90,0 Gew.-% eines Netzmittels, das bioaktivierende Eigenschaften haben kann, bzw. einer Mischung aus verschiedenen Netzmitteln, die bioaktivierende Eigenschaften haben können, enthalten ist.
8) optional weitere, stabilisierende Agentien - z.B. pH-Wert stabilisierende Reagentien (pH-Wert zwischen 6 und 8), Substanzen mit entschäumenden Eigenschaften, Substanzen, die als Säurefänger, Wasserfänger oder Kristallisationhemmer dienen können.

Zur Herstellung einer EC-Formulierung können beispielsweise zwischen 0,1 bis 15,0 Gew.-% Sulfonylhamstoffsalz in 15,0 bis 25,0 Gew.-% Propylencarbonat und 30,0 bis 50,0 Gew.-% eines Aromaten oder Aromatengemisches (Siedebereich 219-282°C) unter Rühren bei 20°C - 30°C gelöst werden.
Nachdem das Sulfonylhamstoffsalz vollständig gelöst ist, gibt man 5,0 bis 15,0 Gew.-% Calcium- oder Natriumsalz der Dodecylbenzolsulfonsäure oder eines Salzgemisches, 5,0 bis 15,0 Gew.-% eines (C₁₂-C₁₈) - Fettsäurepolyglycolesters 40 EO sowie 15,0 bis 20,0 Gew.-% eines Fettalkoholpolyglycolethers unter Rühren zu der Lösung.
Optional kann noch ein Wasserfänger, ein Säurefänger, ein Entschäumer oder ein Kristallisationshemmer eingesetzt werden.

Die in den erfindungsgemäßen Formulierungen enthaltenen Sulfonylharnstoffsalze, z.B. der Formel (la) lassen sich aus bekannten Sulfonylharnstoffen oder Sulfonylharnstoffmetallsalzen. insbesondere Alkalimetallsalzen (siehe z.B. EP-A-30138, EP-A-7687) oder auch ausgehend von Sulfonamidsalzen z.B. auf folgende Weisen herstellen:
1) Deprotonierung von neutralen Sulfonylharnstoffen z.B. der Formel (XIII) mit einer geeigneten Base der Formel M⁺B⁻ (Gl. 1), wobei B⁻ zum Beispiel Hydroxy- oder Alkoxyanionen, wie Methoxy, Ethoxy, ⁿPropoxy, ⁱPropoxy, ⁿButoxy oder ^{t}Butoxy darstellen oder Anionen von Formulierungshilfsstoffen, die mindestens eine OH-Gruppe tragen, z.B. Alkoholate, die alkoxyliert z.B. ethoxyliert oder propoxyliert sein können, wie C₈H₁₇(OCH₂CH₂)O^{⊖} , und M⁺ ein Phosphonium- oder Sulfoniumion ist. 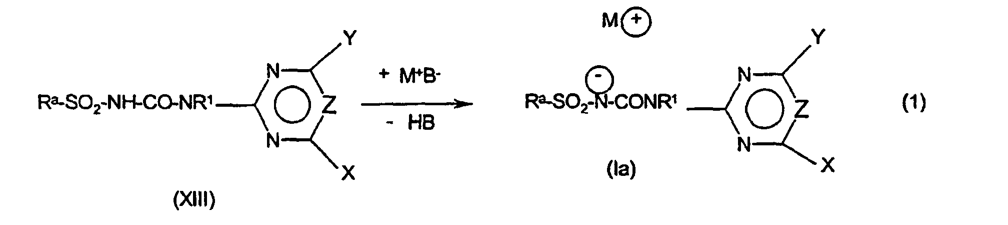 Hierzu wird der Sulfonylharnstoff z.B. der Formel (XIII) in einem inerten Lösungsmittel oder Lösungsmittelgemisch gelöst oder suspendiert und mit einem Äquivalent an M⁺B⁻ bei Temperaturen zwischen -20°C und 100°C, vorzugsweise zwischen -10°C und 50°C umgesetzt.
2) Umsalzung von Metallsalzen von Sulfonylharnstoffen z.B. der Formel (XIV), worin Met^{⊕} ein Metallkation, bevorzugt ein Alkalimetallion wie Na⁺ oder K⁺ ist, mit geeigneten Reagentien der Formel M⁺X'⁻ (Gl. 2), wobei M^{⊕} ein Phosphonium - oder Sulfoniumion ist und X'⁻ ein Anion, beispielsweise ein Halogenanion wie F⁻, Cl⁻ oder Br⁻ bedeutet oder ein Phosphat-, Sulfat- oder Carboxylatanion sein kann, wobei diese Definition anorganische sowie organische Salze einschließt, wie sie z.B. in der Tensidchemie gebräuchlich sind (z.B. organische Phosphatanionen, Phosphonatanionen, Sulfatanionen, Sulfonatanionen, Carboxylate). 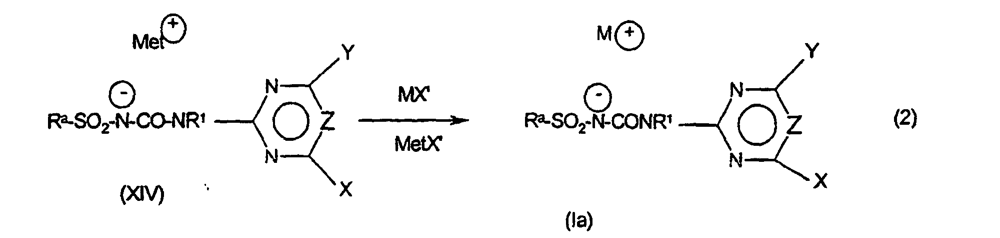 Hierzu werden die literaturbekannten bzw. auf literaturbekannte Weise dargestellten Metallsalz, z.B. Alkalisalze (z.B. Met⊕ = Na+, K+) der entsprechenden Sulfonylharnstoffe in einem inerten Lösungsmittel oder Lösungsmittelgemisch gelöst und mit einem Äquivalent des Reagenz M⁺X'⁻ umgesetzt. Nach beendeter Reaktion kann durch Filtration das als Nebenprodukt anfallende Salz, z.B. Alkalisalz (wie NaCl) abgetrennt werden.
3) In-situ Deprotonierung und Umsalzung (Gl. 3), ausgehend von neutralen Sulfonylharnstoffen z.B. der Formel (XIII) mit geeigneten Reagentien a) der Formel M⁺X'⁻, wobei M⁺ ein Phosphonium- oder Sulfoniumion ist und X'⁻ ein Anion, beispielsweise ein Halogenanion wie F⁻, Cl⁻ oder Br⁻bedeutet oder ein Phosphat-, Sulfat- oder Carboxylatanion sein kann wobei diese Definition anorganische sowie organische Salze einschließt, wie sie z.B. in der Tensidchemie gebräuchlich sind (z.B. organische Phosphatanionen, Phosphonatanionen, Sulfatanionen, Sulfonatanionen, Carboxylate) und b) der Formel MetB, worin Met ein Metallkation, insbesondere ein Alkalimetallkation wie Na⁺ oder K⁺ ist und B eine geeignete Base z.B., ein Hydroxy- oder Alkoxyanion wie Methoxy, Ethoxy, ⁿPropoxy, ⁱPropoxy oder ⁿButoxy ist. 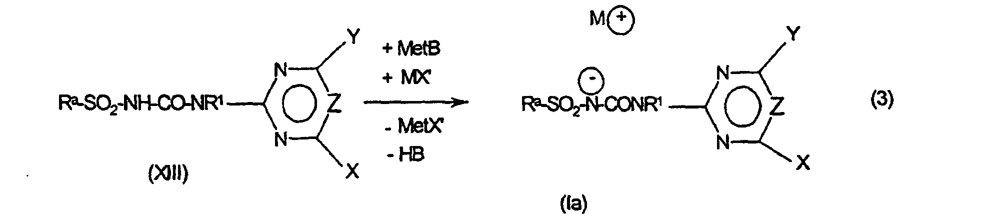 Hierzu wird der Sulfonylhamstoff in einem inerten Lösungsmittel oder Lösungsmittelgemisch gelöst und mit je einem Äquivalent der Reagenzien M⁺X'⁻ und MetB umgesetzt. Nach beender Reaktion kann durch Filtration das als Nebenprodukt anfallende Metallsalz, insbesondere Alkalisalz (z.B. NaCl) abgetrennt werden.
4) Umsetzung eines Sulfonamidsalzes z.B. der Formel XV mit einem Isocyanat z.B. der Formel XVI (Gl. 4). 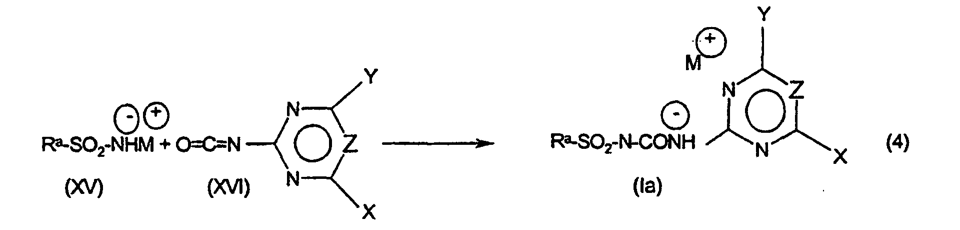
   Die Umsetzung erfolgt in einem inerten Lösungsmittel oder Lösungsmittelgemisch - wie z.B. Tetrahydrofuran (THF) - bei Temperaturen zwischen -20°C und 100°C, vorzugsweise zwischen -10°C und 70°C, indem man das Isocyanat z.B. der Formel XVI äquimolar mit dem Sulfonamidsalz z.B. der Formel XV umsetzt. Dabei kann das Sulfonamidsalz z.B. der Formel XV direkt eingesetzt oder in-situ gebildet werden - z.B. durch Reaktion des entsprechenden Sulfonamides mit einer geeigneten Base M⁺X⁻, worin M⁺ ein Phosphonium- oder Sulfoniumion ist und X⁻ z.B. ein Hydroxy- oder Alkoxyanion ist. Isocyanate z.B. der Formel XVI sind in der Literatur gut bekannt. Diese Umsetzungen führen stets zu Verbindungen, in denen R¹ Wasserstoff entspricht.
5) Umsetzung eines Sulfonamidsalzes z.B. der Formel XV mit einem Carbamat z.B. der Formel XVII (GI. 5).

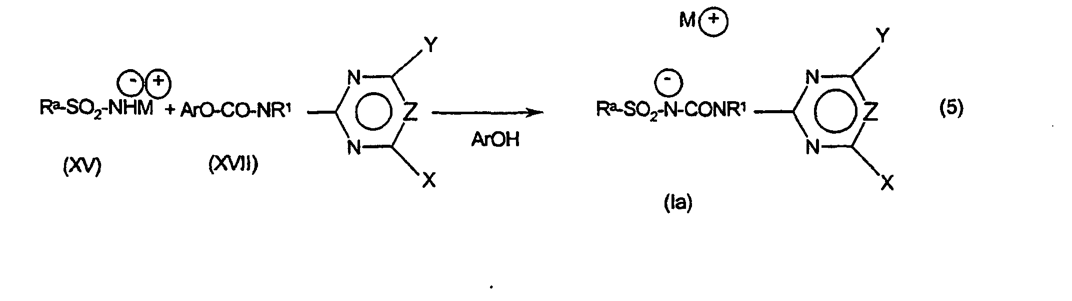

Die Umsetzung erfolgt in einem inerten Lösungsmittel (oder Lösungsmittelgemisch) - wie Tetrahydrofuran - bei Temperaturen zwischen -20°C und 100°C, vorzugsweise zwischen -10°C und 70°C, indem man das Carbamat z.B. der Formel XVII äquimolar mit dem Sulfonamidsalz z.B. der Formel XV umsetzt. Dabei kann das Sulfonamidsalz z.B. der Formel XV direkt eingesetzt oder in-situ gebildet werden-z.B. durch Reaktion des entsprechenden Sulfonamides mit einer geeigneten Base M⁺X⁻, worin M⁺ ein Phosphonium- oder Sulfoniumion ist und X⁻ z.B. ein Hydroxy- oder Alkoxyanion ist. Carbamate z.B. der Formel XVII sind in der Literatur gut bekannt. Ar in Formel XVII bedeutet einen substituierten oder unsubstituierten aromatischen Rest, wie Phenyl, oder 2,4-Dichlorphenyl.

Diese Umsetzung erfolgt zwischen Temperaturen von -20°C bis +100°C, bevorzugt zwischen -10°C und 50°C, in inerten Lösungsmitteln, wie z.B. THF, CH₂Cl₂ oder MeOH oder Gemischen aus Lösungsmitteln, statt.

Die in den Herstellverfahren 1) bis 5) verwendeten Definitionen haben - soweit nicht anderweitig bezeichnet - die gleiche Bedeutung wie oben für die Formeln la und lb angegeben.

Inerte Lösungsmittel bedeutet, daß sich die benutzten Lösungsmittel bzw. Lösungsmittelgemische unter den angegebenen Reaktionsbedingungen chemisch inert verhalten.

Nach den Herstellverfahren 1) bis 5) können die Sulfonylharnstoffsalze einfach hergestellt und isoliert werden. Alternativ dazu kann die Herstellung der Sulfonylhamstoffsalze nach den Verfahren 1), 2) und 3) auch während des Formulierungsprozesses erfolgen.

Die Herstellverfahren der erfindungsgemäßen Verbindungen der Formel (la) sind ebenfalls neu und ebenfalls Gegenstand dieser Erfindung.

Gemäß den vorstehend genannten Herstellungsverfahren lassen sich z.B. die in dennachfolgenden Tabellen genannten Verbindungen herstellen.

Verbindungen der nachfolgenden Formel (A) sind in Tabelle 1 aufgeführt:

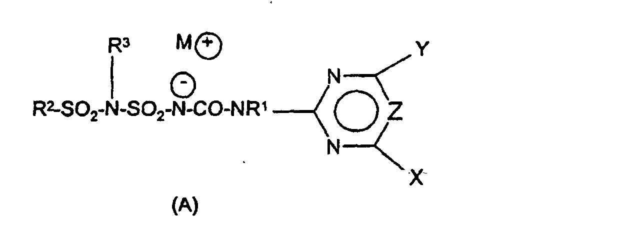

**Tabelle 1**

| Bsp. | R¹ | R² | R³ | M⊕ | X | Y | Z |
|---|---|---|---|---|---|---|---|
| 1 | H | Me | Me | S⊕Me₃ | OMe | OMe | CH |
| 2 | H | Me | Me | S⊕Ph₃ | OMe | OMe | CH |
| 3 | H | Me | Me | P⊕Ph₄ | OMe | OMe | CH |
| 4 | H | Me | Me | PPh₃CH₂Ph⊕ | OMe | OMe | CH |
| 5 | H | Me | Me | PPh₃Me⊕ | OMe | OMe | CH |

Verbindungen der nachfolgenden Formel (B) sind in Tabelle 2 aufgeführt:

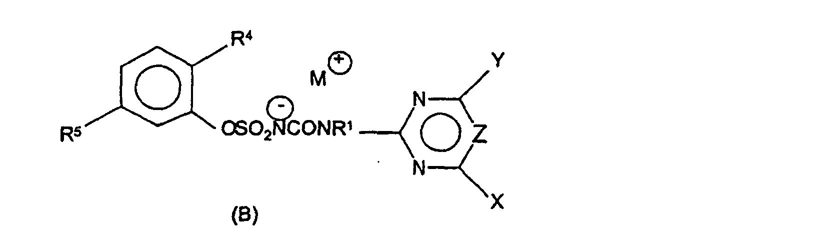

**Tabelle 2**

| Bsp. | R¹ | R⁴ | R⁵ | M^{⊕} | X | Y | Z |
|---|---|---|---|---|---|---|---|
| 1 | H | OEt | H | SMe₃⊕ | OMe | OMe | CH |
| 2 | H | OEt | H | SPh₃⊕ | OMe | OMe | CH |
| 3 | H | OEt | H | PPh₄⊕ | OMe | OMe | CH |
| 4 | H | OEt | H | PPh₃Me⊕ | OMe | OMe | CH |

Verbindungen der nachfolgenden Formel (C) sind in Tabelle 3 aufgeführt:

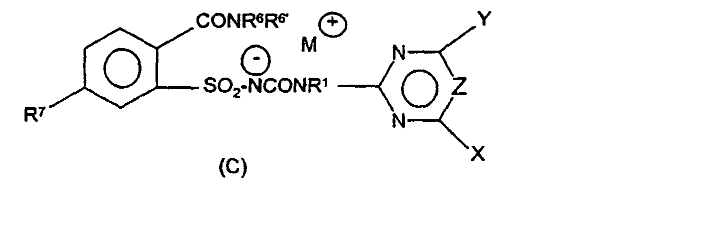

**Tabelle 3**

| Bsp. | R¹ | NR⁶R⁶' | R⁷ | M^{⊕} | X | Y | Z |
|---|---|---|---|---|---|---|---|
| 1 | H | NMe₂ | NHCOOMe | SMe₃⊕ | OMe | OMe | CH |
| 2 | H | NMe₂ | NHCOOMe | SPh₃⊕ | OMe | OMe | CH |
| 3 | H | NMe₂ | NHCOOMe | PPh₄⊕ | OMe | OMe | CH |
| 4 | H | NMe₂ | NHCOOMe | PPh₃Me⊕ | OMe | OMe | CH |
| 5 | H | NMe₂ | NHCHO | SMe₃⊕ | OMe | OMe | CH |
| 6 | H | NMe₂ | NHCHO | SPh₃⊕ | OMe | OMe | CH |
| 7 | H | NMe₂ | NHCHO | PPh₄⊕ | OMe | OMe | CH |
| 8 | H | NMe₂ | NHCHO | PPh₃Me^{⊕} | OMe | OMe | CH |
| 9 | H | NMe₂ | NHCOCH₃ | SMe₃⊕ | OMe | OMe | CH |
| 10 | H | NMe₂ | NHCOCH₃ | SPh₃⊕ | OMe | OMe | CH |
| 11 | H | NMe₂ | NHCOCH₃ | PPh₄⊕ | OMe | OMe | CH |
| 12 | H | NMe₂ | NHCOCH₃ | PPh₃Me^{⊕} | OMe | OMe | CH |

Verbindungen der nachfolgenden Formel (D) sind in Tabelle 4 aufgeführt:

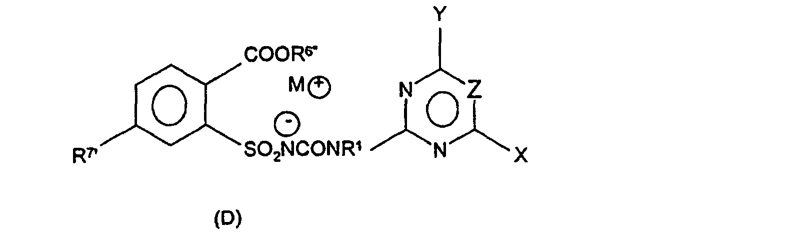

**Tabelle 4**

| Bsp. | R¹ | R^{6''} | R^{7'} | M⊕ | X | Y | Z |
|---|---|---|---|---|---|---|---|
| 1 | H | Me | I | SMe₃⊕ | Me | OMe | N |
| 2 | H | Me | I | SPh₃⊕ | Me | OMe | N |
| 3 | H | Me | I | PPh₄⊕ | Me | OMe | N |
| 4 | H | Me | I | PPh₃Me⊕ | Me | OMe | N |
| 5 | H | Me | CH₂NHCHO | SMe₃⊕ | OMe | OMe | CH |
| 6 | H | Me | CH₂NHCHO | SPh₃⊕ | OMe | OMe | CH |
| 7 | H | Me | CH₂NHCHO | PPh₄⊕ | OMe | OMe | CH |
| 8 | H | Me | CH₂NHCHO | PPh₃Me⊕ | OMe | OMe | CH |
| 9 | H | Me | CH₂NH-COOMe | SMe₃⊕ | OMe | OMe | CH |
| 10 | H | Me | CH₂NH-COOMe | SPh₃⊕ | OMe | OMe | CH |
| 11 | H | Me | CH₂NH-COOMe | PPh₄⊕ | OMe | OMe | CH |
| 12 | H | Me | CH₂NH-COOMe | PPh₃Me⊕ | OMe | OMe | CH |
| 13 | H | Me | CH₂NH-SO₂Me | SMe₃⊕ | OMe | OMe | CH |
| 14 | H | Me | CH₂NH-SO₂Me | SPh₃⊕ | OMe | OMe | CH |
| 15 | H | Me | CH₂NH-SO₂Me | PPh₄⊕ | OMe | OMe | CH |
| 16 | H | Me | CH₂NH-SO₂Me | PPh₃Me⊕ | OMe | OMe | CH |
| 17 | H | Me | CH₂NMeSO₂Me | SMe₃⊕ | OMe | OMe | CH |
| 18 | H | Me | CH₂NMeSO₂Me | SPh₃⊕ | OMe | OMe | CH |
| 19 | H | Me | CH₂NMeSO₂Me | PPh₄⊕ | OMe | OMe | CH |
| 20 | H | Me | CH₂NMeSO₂Me | PPh₃Me^{**⊕**} | OMe | OMe | CH |
| 21 | H | Me | I | SMe3⊕ | OMe | OMe | N |
| 22 | H | Me | I | SPh₃⊕ | OMe | OMe | N |
| 23 | H | Me | I | PPh₄⊕ | OMe | OMe | N |
| 24 | H | Me | I | PPh₃Me^{⊕} | OMe | OMe | N |
| 25 | Me | Me | H | SMe₃⊕ | OMe | Me | N |
| 26 | Me | Me | H | SPh₃⊕ | OMe | Me | N |
| 27 | Me | Me | H | PPh₄⊕ | OMe | Me | N |
| 28 | Me | Me | H | PPh₃Me⊕ | OMe | Me | N |
| 29 | H | Me | H | SMe₃⊕ | OMe | Me | N |
| 30 | H | Me | H | SPh₃⊕ | OMe | Me | N |
| 31 | H | Me | H | PPh₄**⊕** | OMe | Me | N |
| 32 | H | Me | H | PPh₃Me^{⊕} | OMe | Me | N |
| 33 | H | Me | F | SMe₃⊕ | OMe | Me | N |
| 34 | H | Me | F | SPh₃⊕ | OMe | Me | N |
| 35 | H | Me | F | PPh₄⊕ | OMe | Me | N |
| 36 | H | Me | F | PPh3Me**⊕** | OMe | Me | N |
| 37 | H | Me | Cl | SMe₃⊕ | OMe | Me | N |
| 38 | H | Me | Cl | SPh₃⊕ | OMe | Me | N |
| 39 | H | Me | Cl | PPh₄⊕ | OMe | Me | N |
| 40 | H | Me | Cl | Ph₃Me^{⊕} | Ome | Me | N |

Verbindungen der nachfolgenden Formel (E) sind in Tabelle 5 aufgeführt:

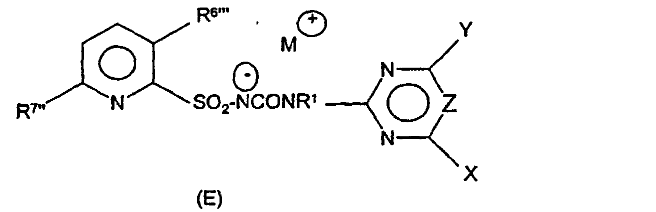

**Tabelle 5**

| Bsp. | R' | R^{6'"} | R^{7"} | M⊕ | X | Y | Z |
|---|---|---|---|---|---|---|---|
| 1 | H | Me | Cl | PPh₃Me⊕ | OMe | Me | N |
| 2 | H | NMeSO₂Me | H | SMe₃⊕ | OMe | OMe | CH |
| 3 | H | NMeSO₂Me | H | SPh₃⊕ | OMe | OMe | CH |
| 4 | H | NMeSO₂Me | H | PPh₄⊕ | OMe | OMe | CH |
| 5 | H | NMeSO₂Me | H | PPh₃Me⊕ | OMe | OMe | CH |
| 6 | H | NHSO₂Me | H | SMe₃⊕ | OMe | OMe | CH |
| 7 | H | NHSO₂Me | H | SPh₃⊕ | OMe | OMe | CH |
| 8 | H | NHSO₂Me | H | ⊕ PPh₄⊕ | OMe | OMe | CH |
| 9 | H | NHSO₂Me | H | ⊕ PPh₃Me⊕ | OMe | OMe | CH |
| 10 | H | NEtCOCH₃ | H | SMe₃⊕ | OMe | OMe | CH |
| 11 | H | NEtCOCH₃ | H | SPh₃⊕ | OMe | OMe | CH |
| 12 | H | NEtCOCH₃ | H | PPh₄⊕ | OMe | OMe | CH |
| 13 | H | NEtCOCH₃ | H | PPh₃Me⊕ | OMe | OMe | CH |
| 14 | H | NEtCHO | H | SMe₃⊕ | OMe | OMe | CH |
| 15 | H | NEtCHO | H | SPh₃⊕ | OMe | OMe | CH |
| 16 | H | NEtCHO | H | PPh₄⊕ | OMe | OMe | CH |
| 17 | H | NEtCHO | H | PPh₃Me⊕ | OMe | OMe | CH |
| 18 | H | N"PrCHO | H | SMe₃⊕ | OMe | OMe | CH |
| 19 | H | N"PrCHO | H | SPh₃ ⊕ | OMe | OMe | CH |
| 20 | H | N"PrCHO | H | PPh₄⊕ | OMe | OMe | CH |
| 21 | H | N"PrCHO | H | PPh₃Me^{⊕} | OMe | OMe | CH |

Die erfindungsgemäßen Verbindungen der Formel (la) wie auch die erfindungsgemäßen Formulierungen können als Herbizide gegen ein breites Spektrum wirtschaftlich wichtiger mono- und dikotyler Schadpflanzen eingesetzt werden. Auch schwer bekämpfbare perennierende Unkräuter, die aus Rhizomen, Wurzelstöcken oder anderen Dauerorganen austreiben, werden durch die Wirkstoffe gut erfaßt. Dabei ist es gleichgültig, ob die Substanzen im Vorsaat-, Vorauflauf oder Nachauflaufverfahren ausgebracht werden. Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.
Auf der Seite der monokotylen Unkrautarten werden z.B. Avena, Lolium, Alopecurus, Phalaris, Echinochloa, Digitaria, Setaria sowie Cyperusarten aus der annuellen Gruppe und auf seiten der perennierenden Spezies Agropyron, Cynodon, Imperata sowie Sorghum und auch ausdauernde Cyperusarten gut erfaßt.
Bei dikotylen Unkrautarten erstreckt sich das Wirkungsspektrum auf Arten wie z.B. Galium, Viola, Veronica, Lamium, Stellaria, Amaranthus, Sinapis, Ipomoea, Matricaria, Abutilon und Sida auf der annuellen Seite sowie Convolvulus, Cirsium, Rumex und Artemisia bei den perennierenden Unkräutern.
Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Wirkstoffen ebenfalls hervorragend bekämpft.
Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Obgleich die erfindungsgemäßen Verbindungen und Formulierungen eine ausgezeichnete herbizide Aktivität gegenüber mono- und dikotylen Unkräutern aufweisen, werden Kulturpflanzen wirtschaftlich bedeutender Kulturen wie z.B. Weizen, Gerste, Roggen, Reis, Mais, Zuckerrübe, Baumwolle und Soja nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüberhinaus weisen die erfindungsgemäßen Substanzen und Formulierungen hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Emteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die Wirkstoffe und Formulierungen auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden. Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Emteguts bekannt.

Bevorzugt ist die Anwendung der erfindungsgemäßen Verbindungen und Formulierungen in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten.
Vorzugsweise können die erfindungsgemäßen Formulierungen und Verbindungen als Herbizide in Nutzpflanzenkulturen eingesetzt werden, welche gegenüber den phytotoxischen Wirkungen der Herbizide resistent sind bzw. gentechnisch resistent gemacht worden sind.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche gegen bestimmte Herbizide vom Typ Glufosinate (vgl. z. B. EP-A-0242236, EP-A-242246) oder Glyphosate (WO 92/00377) oder der Sulfonylharnstoffe (EP-A-0257993, US-A-5013659) resistent sind,
- transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Verbindungen und Formulierungen in transgenen Kulturen eingesetzt werden, welche gegen Herbizide aus der Gruppe der Sulfonylhamstoffe, Glufosinate-ammonium oder Glyphosate-isopropylammonium und analoge Wirkstoffe resistent sind.

Bei der Anwendung der erfindungsgemäßen Wirkstoffe in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Formulierungen wie auch der erfindungsgemäßen Verbindungen der Formeln (Ia) als Herbizide oder als Pflanzenwachstumsregulatoren.

Die erfindungsgemäßen EC-Formulierungen haben den Vorteil, daß sie im allgemeinen sehr benutzerfreundlich und kostengünstig herstellbar sind. Zudem bietet dieser Formulierungstyp prinzipiell die Möglichkeit, auf eine einfache und kostengünstige Art Kombinationspräparate herzustellen. Voraussetzung ist, daß sich der Kombinationspartner in dem gewählten organischen Solvenssystem in der gewünschten Konzentration löst und sich chemisch inert verhält.

Die erfindungsgemäßen Formulierungen, insbesondere die EC-Formulierungen zeichnen sich durch eine hohe chemische Stabilität aus. Zudem können die erfindungsgemäßen Formulierungen, insbesondere die EC-Formulierungen, neben der chemischen Stabilität auch eine "höhere Beladung" (höhere Konzentration) der Formulierung an Wirkstoffsalzen aufweisen. Auch lassen sich die erfindungsgemäßen Formulierungen gleichermaßen als flüssige Formulierung (z.B. EC-Formulierung) oder als feste Formulierung (z.B. WP- oder WG-Formulierung) herstellen.

### Beispiele

### Formulierungsbeispiele

Die in Tabelle I genannten Formulierungen werden erhalten, indem man das Lösungsmittel Dowanol PM bei Raumtemperatur vorlegt und nacheinander unter mechanischem Rühren die Sulfonylhamstoffkomponente sowie die angegebenen Hilfsstoffe zumischt.

Die Beispiele aus Tabelle I zeigen, daß sich unter Verwendung von speziellen Sulfonylhamstoffsalzen im Gegensatz zu den entsprechenden neutralen Sulfonylhamstoffen oder deren Metallsalzen, stabile EC-Formulierungen mit einer wirtschaftlich attraktiven Beladung an Wirkstoffen) herstellen lassen.

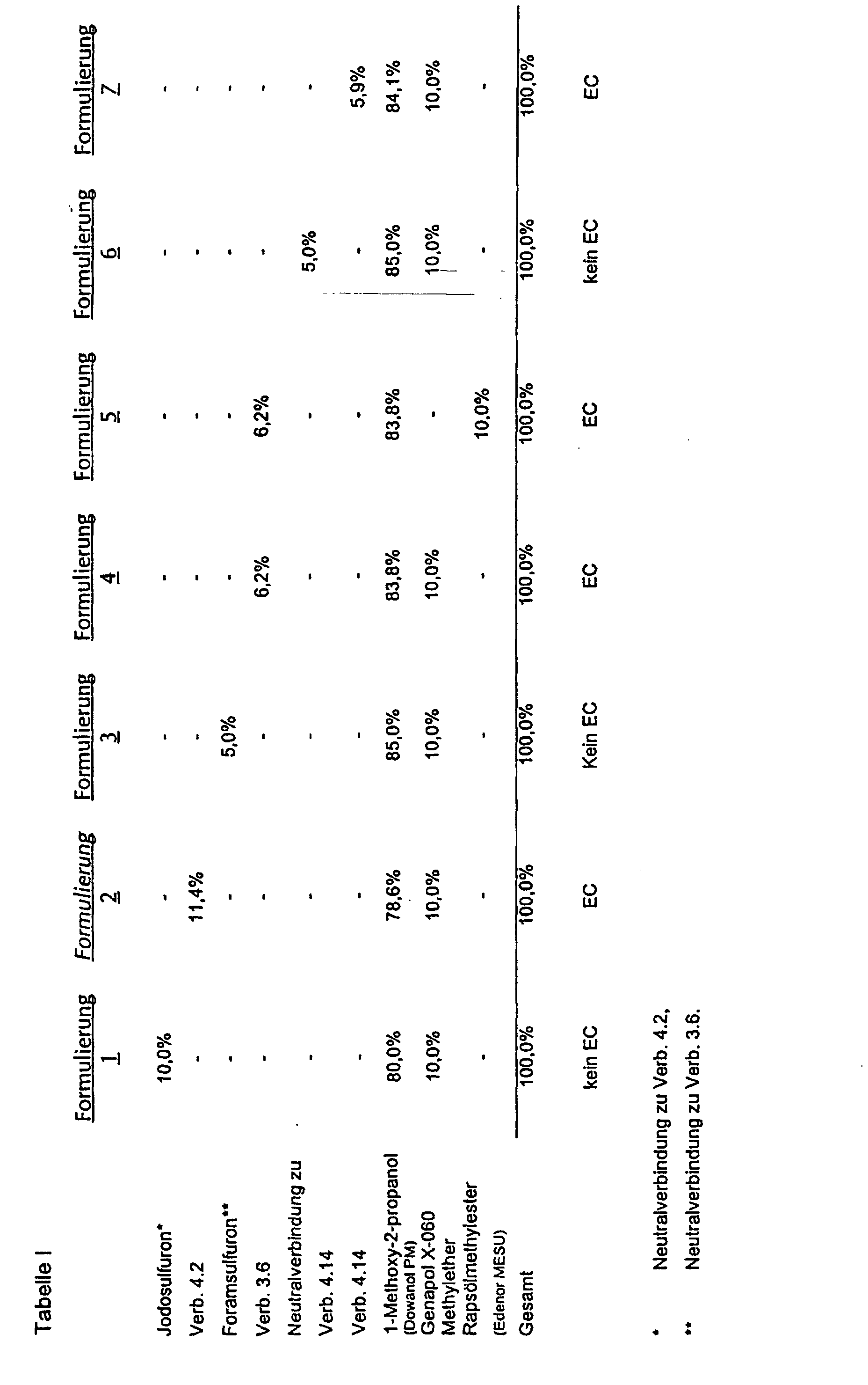

## Patentansprüche

1. Formulierung, enthaltend
a) mindestens ein Phosphonium- oder Sulfoniumsalz eines Sulfonylharnstoffs, wobei das Phosphonium- und Sulfoniumkation des Salzes mindestens einen Substituenten aufweist, der von Wasserstoff verschieden ist, und
b) übliche Hilfs- und Zusatzstoffe.

2. Formulierung gemäß Anspruch 1, enthaltend mindestens ein quartäres Phosphoniumsalz oder mindestens ein tertiäres Sulfoniumsalz eines Sulfonyharnstoffs.

3. Formulierung gemäß Anspruch 1 oder 2, enthaltend mindestens ein Sulfonylharnstoffsalz der Formel (la) 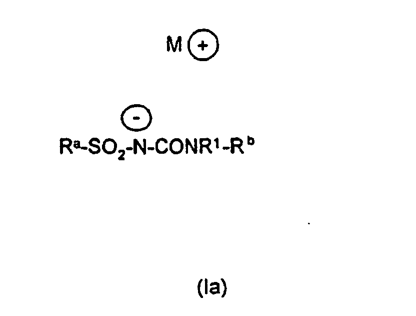 worin R^{a} ein substituierter aliphatischer, aromatischer oder heterocyclischer Rest oder eine elektronenziehende Gruppe wie ein substituierter Sulfonamidrest ist, vorzugsweise ist
R^{a} ein Rest der Formel II-IVc, 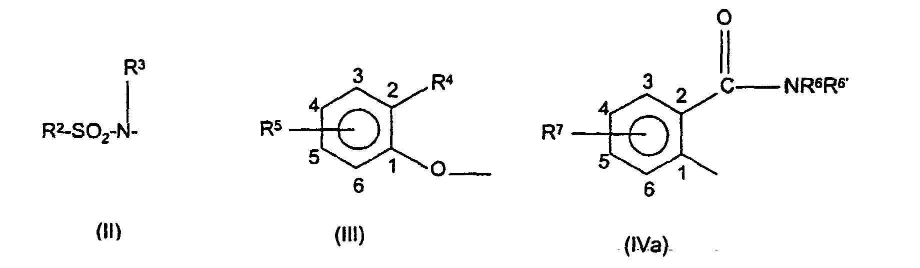 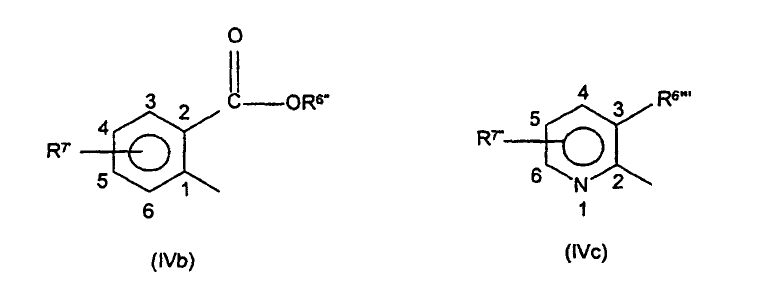 R^{b} ein Heteroyclylrest ist, vorzugsweise ein stickstoffhaltiger Heteroyclylrest, besonders bevorzugt ein Heteroyclyrest mit 2 oder 3 Stickstoffatomen im Ring, ganz besonders bevorzugt ein Rest 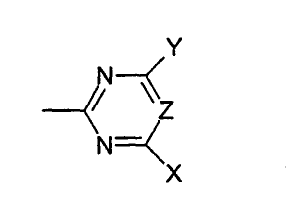 worin
R¹ H oder ein C₁-C₁₀-Kohlenwasserstoffrest wie (C₁-C₆)-Alkyl ist,
R² ein substituierter oder unsubstituierter C₁-C₂₀-Kohlenwasserstoffrest wie substituiertes oder unsubstituiertes (C₁-C₆)-Alkyl, substituiertes oder unsubstituiertes (C₂-C₆)-Alkenyl), substituiertes oder unsubstituiertes (C₂-C₆)-Alkinyl), substituiertes oder unsubstituiertes (C₃-C₇)-Cycloalkyl ist,
R³ ein substituierter oder unsubstituierter C₁-C₂₀-Kohlenwasserstoffrest wie substituiertes oder unsubstituiertes (C₁-C₆)-Alkyl, substituiertes oder unsubstituiertes (C₂-C₆)-Alkenyl), substituiertes oder unsubstituiertes (C₂-C₆)-Alkinyl), substituiertes oder unsubstituiertes (C₃-C₇)-Cycloalkyl ist,
R⁴ Halogen wie F, Cl, Br, J oder ein substituierter oder unsubstituierter C₁-C₂₀-Kohlenwasserstoffrest oder C₁-C₂₀-Kohlenwasserstoffoxyrest wie (C₁-C₆)-Alkyl, (C₁-C₆)-Alkenyl), (C₂-C₆)-Alkinyl), (C₁-C₆)Alkoxy), (C₃-C₆)-Alkenyloxy), (C₃-C₆)-Alkinyloxy), wobei die letztgenannten 6 Reste durch einen oder-mehrere Reste bevorzugt aus der Gruppe Halogen wie F,Cl, Br oder J oder (C₁-C₃)-Alkoxy substituiert sein können, ist,
R⁵ H, Halogen wie F, Cl, Br, J oder ein substituierter oder unsubstituierter C₁-C₂₀-Kohlenwasserstoffrest oder C₁-C₂₀-Kohlenwasserstoffoxyrest wie (C₁-C₆)-Alkyl, das durch ein oder mehrere Reste aus der Gruppe Halogen wie F,Cl, Br oder J oder (C₁-C₃)-Alkoxy substituiert sein kann oder (C₁-C₅)-Alkoxy, das durch ein oder mehrere Reste aus der Gruppe Halogen (F,Cl, Br, J) oder (C₁-C₃)-Alkoxy substituiert sein kann, ist
R⁶ und R^{6'} gleich oder verschieden H oder ein substituierter oder unsubstituierter C₁-C₂₀-Kohlenwasserstoffrest wie C₁-C₆-Alkyl (z.B. Me, Et, ⁿPr, ⁱPr, ^{c}Pr) sind, wobei R⁶ und R^{6'} einen Ring bilden können, der unsubstituiert oder substituiert ist,
R⁷ H, Halogen wie F, Cl, Br oder J, OH, NR^{x}R^{y}, worin R^{x}und R^{y} H oder (C₁-C₃)-Alkyl sind, oder R⁷N-(C₁-C₃)Alkyl-N-Acylamino oder N-Acylamino oder ein substituierter oder unsubstituierter C₁-C₂₀-Kohlenwasserstoffrest oder Kohlenwasserstoffoxyrest wie (C₁-C₃)-Alkyl, (C₁-C₃)-Haloalkyl, Halogen, , (C₁-C₃)-Alkyl-(N-(C₁-C₃)-Alkyl-N-Acylamino), (C₁-C₃)-Alkyl-(N-Acylamino) oder (C₁-C₃)-Alkoxy ist,
R^{6''} ein substituierter oder unsubstituierter C₁-C₂₀-Kohlenwasserstoffrest wie substituiertes oder unsubstituiertes (C₁-C₆)-Alkyl, substituiertes oder unsubstituiertes (C₃-C₆)Alkenyl, substituiertes oder unsubstituiertes (C₃-C₆)Cycloalkyl, substituiertes oder unsubstituiertes (C₃-C₇)-Alkinyl, substituiertes oder unsubstituiertes (C₄-C₈)-Cycloalkylalkyl, ist,
R^{7'} H, Halogen wie F, Cl, Br oder J, OH, NR^{x}R^{y}, worin R^{x}und R^{y} H oder (C₁-C₃)-Alkyl sind, oder R^{7'} N-(C₁-C₃)-Alkyl-N-Acylamino, N-Acylamino oder ein substituierter oder unsubstituierter C₁-C₂₀-Kohlenwasserstoffrest oder C₁-C₂₀-Kohlenwasserstoffoxyrest wie (C₁-C₃)-Alkyl, (C₁-C₃)-Haloalkyl, (C₁-C₃)-Alkyl-(N-(C₁-C₃)-Alkyl-N-Acylamino), (C₁-C₃)-Alkyl-(N-Acylamino) oder (C₁-C₃)-Alkoxy ist,
R^{6'''} Halogen wie F, Cl, Br oder J oder ein substituierter oder unsubstituierter C₁-C₂₀-kohlenstoffhaltiger Rest wie (C₁-C₆)-Alkyl, das durch ein oder mehrere Reste aus der Gruppe Halogen (F, Cl, Br, J) oder (C₁-C₃)-Alkoxy substituiert sein kann, (C₁-C₆)-Alkoxy, das durch ein oder mehrere Reste aus der Gruppe Halogen (F, Cl, Br, J) oder (C₁-C₃)-Alkoxy substituiert sein kann, substituiertes oder unsubstituiertes Alkoxycarbonyl, substituiertes oder unsubstituiertes Dialkylamino-Carbonyl, substituiertes oder unsubstituiertes (C₁-C₆)-Alkylsulfonyl, (C₁-C₆)-Mono- oder dialkylamino, N-(C₁-C₆)-Alkyl-N-acylamino oder N-Acylamino, ist,
R^{7"} H, Halogen wie F, Cl, Br, J, OH, NR^{x}R^{y}, worin R^{x}und R^{y} H oder (C₁-C₃)-Alkyl sind, oder R^{7"} ein substituierter oder unsubstituierter C₁-C₂₀-Kohlenwasserstoffrest oder Kohlenwasserstoffoxyrest wie (C₁-C₆)-Alkyl, (C₁-C₆)-Haloalkyl, (C₁-C₆)-Alkoxy oder (C₁-C₆)-Haloalkoxy ist,
M+ ein quartäres Phosphoniumion oder ein tertiäres Sulfoniumion ist,
X substituiertes oder unsubstituiertes (C₁-C₆)-Alkyl, substituiertes oder unsubstituiertes (C₁-C₆)-Alkoxyl, Halogen wie F, Cl, Br oder J, substituiertes oder unsubstituiertes (C₁-C₆)-Mercapto-alkyl oder (C₁-C₃)-Mono- oder (C₁-C₃)-Dialkylamino ist,
Y substituiertes oder unsubstituiertes (C₁-C₆)-Alkyl, substituiertes oder unsubstituiertes (C₁-C₆)-Alkoxyl, Halogen wie F, Cl, Br oder J, substituiertes oder unsubstituiertes (C₁-C₆)-Mercapto-alkyl oder (C₁-C₃)-Mono- oder (C₁-C₃)-Dialkylamino, ist, und
Z C-Halogen wie CF, CCI, CBr oder CJ, CH oder N ist.

4. Formulierung gemäß einem oder mehreren der Ansprüche 1 bis 3, enthaltend eine oder mehrere von dem in Anspruch 1 definierten Sulfonylhamstoffsalz verschiedene Agrochemikalien wie Herbizide, Fungizide, Insektizide, Wachstumsregulatoren, Safener, Dünger.

5. Formulierung gemäß einem oder mehreren der Ansprüche 1 bis 4, enthaltend ein Netzmittel, das bioaktivierende Eigenschaften aufweist oder eine Mischung aus verschiedenen Netzmitteln, die bioaktivierende Eigenschaften aufweisen.

6. Formulierung gemäß einem oder mehreren der Ansprüche 1 bis 5, enthaltend eine pH-Wert-stabilisierende Substanz oder Substanzgemisch.

7. Formulierung gemäß einem oder mehreren Ansprüche 1 bis 6, enthaltend eine Substanz oder ein Substanzgemisch mit entschäumenden Eigenschaften.

8. Formulierung gemäß einem oder mehreren Ansprüche 1 bis 7, enthaltend eine Substanz oder ein Substanzgemisch, das als Säurefänger wirkt.

9. Formulierung gemäß einem oder mehreren Ansprüche 1 bis 8, enthaltend eine Substanz oder ein Substanzgemisch, das als Wasserfänger wirkt.

10. Formulierung gemäß einem oder mehreren der Ansprüche 1 bis 9, enthaltend eine Substanz oder ein Substanzgemisch, das als Kristallisationshemmer wirkt.

11. Formulierung gemäß einem oder mehreren der Ansprüche 1 bis 10, enthaltend ein Tensid oder Tensidgemisch.

12. Formulierung gemäß einem oder mehreren der Ansprüche 1 bis 11, enthaltend im allgemeinen 00,1 - 70,0 Gew.-%. eines oder mehrerer Phosphoniumoder Sulfoniumsalze von Sulfonylhamstoffen, im allgemeinen 5,0 - 95,0 Gew-% von einem polaren und/oder hydrophoben Lösemittel, im allgemeinen 2,0 - 40,0 Gew.-% einer Mischung aus anionischen und nichtionischen Tensiden oder einer Mischung aus kationischen und nichtionischen Tensiden.

13. Verwendung der Formulierung gemäß einem oder mehreren der Ansprüche 1 bis 12 als herbizides oder pflanzenwachstumsregulierendes Mittel.

14. Verbindung der Formel (la) wie in Anspruch 3 definiert.

15. Verbindung der Formel (la) gemäß Anspruch 14, worin
R¹ H oder Me,
R² (C₁-C₃)-Alkyl oder (C₁-C₃)-Haloalkyl, insbesondere Me und Et,
R³ (C₁-C₃)-Alkyl oder (C₁-C₃)-Haloalkyl, insbesondere Me und Et,
R⁴ (C₁-C₆)-Alkyl, (C₁-C₆)-Haloalkyl oder (C₁-C₆)-Alkoxy, insbesondere Me, Et, OMe, OEt oder CF₃,
R⁵ H, Halogen wie F, Cl, Br oder J, OMe, OEt, Me, CF₃, wobei die von Wasserstoff verschiedenen Reste R⁵ in Formel (III) bevorzugt in der 5-Position am Phenylring stehen,
R⁶ und R^{6'} gleich oder verschieden C₁-C₆-Alkyl sind, vorzugsweise R⁶ = Me, R⁶' = Me; R⁶ = Me, R⁶' = Et und R⁶' = Et, R⁶ = Et.
R⁷ H, Me, Et, CF₃, F, Cl, Br, J, N[(C₁-C₃)-Alkyl]-R⁸, NH-R⁹, CH₂N[(C₁-C₃)-Alkyl]-R¹⁰, CH² NH-R¹¹, CH₂CH₂N[(C₁-C₃)-Alkyl]-R¹², CH₂CH₂NH-R¹³, wobei die von Wasserstoff verschiedenen Reste R⁷ in Formel (IVa) bevorzugt in der 5-Position am Phenylring stehen, und die Reste R⁸ bis R¹³ H, (C₁-C₆)-Alkyl, (C₁-C₆)- Haloalkyl, CHO, COO(C₁-C₆)-Alkyl, COO(C₁-C₆)-Haloalkyl, SO₂-(C₁-C₆)-Alkyl, SO₂-(C₁-C₆)-Haloalkyl, CO-(C₁-C₆)-Alkyl oder CO-(C₁-C₆)-Haloalkyl bedeuten,
R^{6''} Me, Et, ⁿPr, ⁱPr, ^{c}Pr, ⁿBu, ⁱBu, ^{s}Bu, ^{t}Bu, ^{c}Bu, insbesondere Me oder Et
R^{7'} H, Me, Et, CF₃, F, Cl, Br, l, N[(C₁-C₃)-Alkyl]-R⁸, NH-(C₁-C₃)-Alkyl, CH₂N[(C₁-C₃)-Alkyl]-R¹⁰, CH₂NH-R¹¹, CH₂CH₂N[(C₁-C₃)-Alkyl]-R¹², CH₂CH₂NH-R¹³, wobei die von Wasserstoff verschiedenen Reste R^{7'} in Formel (IVb) bevorzugt in der 5-Position am Phenylring stehen, und die Reste R⁸ und R¹⁰ bis R¹³ H, (C₁-C₆)-Alkyl, (C₁-C₆)- Haloalkyl, CHO, COO(C₁₋C₆)-Alkyl, COO(C₁-C₆)-Haloalkyl, SO₂-(C₁-C₆)-Alkyl, SO₂-(C₁-C₆)Haloalkyl, CO-(C₁-C₆)-Alkyl oder CO-(C₁-C₆)-Haloalkyl bedeuten,
R^{6'''} Me, Et, Pr, CH₂CH₂CF₃, OMe, OEt, OⁱPr, OCH₂CH₂Cl, F, Cl, COOMe, COOEt, COOⁿPr, COOⁱPr, CONMe₂, CONEt₂, SO₂Me, SO₂Et, SO₂ ⁱPr, unsubstituiertes oder substituiertes NH-(C₁-C₆)-Alkyl-Acyl, unsubstituiertes oder substituiertes NH-(C₃-C₇)-Cycloalkyl, unsubstituiertes oder substituiertes (C₄-C₈)-Cycloalkylalkyl, unsubstituiertes oder substituierters N-(C₃-C₇)-Cycloalkyl-Aryl, unsubstituiertes oder substituiertes N-(C₄-C₈)Cycloalkylalky-Acyl, vorzugsweise N-(C₁-C₆)-Alkyl-CHO, N-(C₁-C₆)-Alkyl-CO-R, N-(C₁-C₆)Alkyl-SO₂R, NH-CHO, NH-CO-R, NHSO₂R, wobei die Reste R (C₁-C₆)-(Halo)-Alkyl, (C₁-C₆)-(Halo)-Alkoxy, (C₁-C₃)-Alkoxy-(C₁-C₆)-Alkyl, (C₁-C₃)Alkoxy-(C₁-C₆)-Alkoxy oder Mono- und Di-(C₁-C₆)-Alkylamino,
R^{7''} H, F, Cl, Me, Et, CF₃, OCH₃, OEt, OCH₂CF₃, vorzugsweise H ist,
M⁺ [SR¹⁸R¹⁹R²⁰]⁺ oder [PR²¹R²²R²³R²⁴]^{*+*} ist, wobei
R¹⁸ bis R²⁵ gleich oder voneinander verschieden substituiertes oder unsubstituiertes (C₁-C₃₀)-Alkyl, substituiertes oder unsubstituiertes (C₁-C₁₀)-Alkyl-(Hetero)-aryl, substituiertes oder unsubstituiertes (C₃-C₃₀)-(Oligo)-Alkenyl, substituiertes oder unsubstituiertes (C₃-C₁₀)-(Oligo)-Alkenyl-(Hetero)-Aryl, substituiertes oder unsubstituiertes (C₃-C₃₀)-(Oligo)-Alkinyl, substituiertes oder unsubstituiertes (C₃-C₁₀)-(Oligo)-Alkinyl-(Hetero)-Aryl, substituiertes oder unsubstituiertes (Hetero)-Aryl sind, und wobei zwei Reste R¹⁸/R¹⁹, R²¹/R²² und R²³/R²⁴ zusammen einen unsubstituierten oder substituierten Ring bilden können,
X Me, Et, Pr, iPr, CF₃, CCl₃, OMe, OEt, OⁱPr, OCHCl₂, OCH₂CCl₃, OCH₂CF₃, F, Cl, Br, SMe, SEt, NHMe, NMe₂, NHEt, vorzugsweise OMe, OEt, Me, Cl
Y Me, Et, Pr, ⁱPr, CF₃, CCl₃, OMe, OEt, OⁱPr, OCHCl₂, OCH₂CCl₃, OCH₂CF₃, F, Cl, Br, SMe, SEt, NHMe, NMe₂, NHEt, vorzugsweise OMe, OEt, Me, Cl
und
Z CH und N
bedeuten.

16. Verwendung einer oder mehrerer Verbindungen der Formel (Ia) gemäß Anspruch 14 oder 15 als herbizides oder pflanzenwachstumsregulierendes Mittel.

17. Verfahren zur Herstellung einer Verbindung der Formel (la), gemäß Anspruch 14 oder 15.

18. Verwendung einer Verbindung der Formel (XVIII)
R-O(EO)_{w}(PO)ₓ(EO)_{y}(PO)_{z}⊖ M⊕ (XVIII)
worin
w, x, y und z unabhängig voneinander eine ganze Zahl 0 bis 50 sind,
R ein unsubstitulerter oder substitulerter C₈-C₄₀-Kohlenwasserstoff ist,
EO eine Ethoxyeinheit ist,
PO eine Propoxyeinheit ist und
M⊕ ein Phosphonium- oder Sulfoniumion ist,
zur Herstellung einer agrochemischen Formulierung, enthaltend Komponenten a) und b) gemäß Anspruch 1.

## Claims

1. A formulation, comprising
a) at least one phosphonium or sulfonium salt of a sulfonylurea, where the phosphonium and sulfonium cation of the salt has at least one substituent which is different from hydrogen, and
b) customary auxiliaries and additives.

2. A formulation according to claim 1, comprising at least one quaternary phosphonium salt or at least one tertiary sulfonium salt of a sulfonylurea.

3. A formulation according to claim 1 or 2, comprising at least one sulfonylurea salt of the formula (1a) 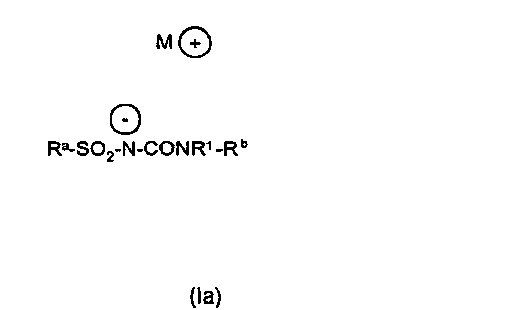 in which R^{a} is a substituted aliphatic, aromatic or heterocyclic radical or an electron-withdrawing group, such as a substituted sulfonamide radical;
preferably
R^{a} is a radical of the formula II-IVc, 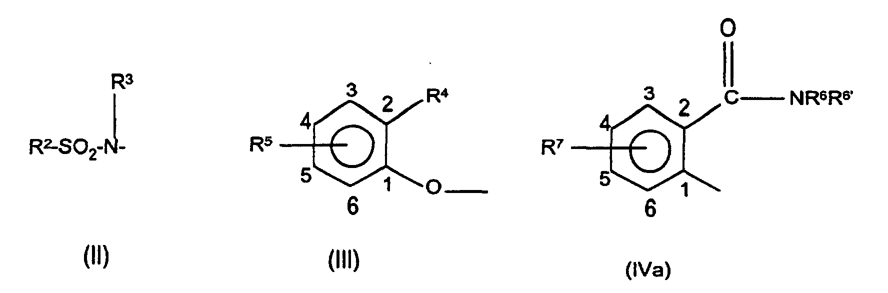 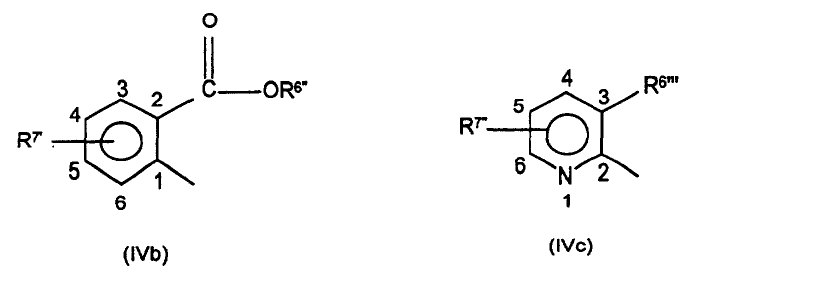 R^{b} is a heterocyclyl radical, preferably a nitrogen-containing heterocyclyl radical, particularly preferably a heterocyclyl radical having 2 or 3 nitrogen atoms in the ring, very particularly preferably a radical 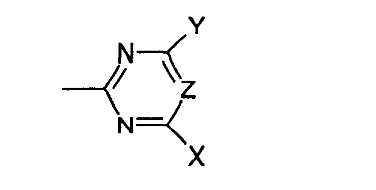 in which
R¹ is H or a C₁-C₁₀-hydrocarbon radical, such as (C₁-C₆)-alkyl,
R² is a substituted or unsubstituted C₁-C₂₀-hydrocarbon radical, such as substituted or unsubstituted (C₁-C₆)-alkyl, substituted or unsubstituted (C₂-C₆)-alkenyl, substituted or unsubstituted (C₂-C₆)-alkynyl, substituted or unsubstituted (C₃-C₇)-cycloalkyl,
R³ is a substituted or unsubstituted C₁-C₂₀-hydrocarbon radical, such as substituted or unsubstituted (C₁-C₆)-alkyl, substituted or unsubstituted (C₂-C₆)-alkenyl, substituted or unsubstituted (C₂-C₆)-alkynyl, substituted or unsubstituted (C₃-C₇)-cycloalkyl,
R⁴ is halogen, such as F, Cl, Br, I, or a substituted or unsubstituted C₁-C₂₀-hydrocarbon radical or C₁-C₂₀-hydrocarbonoxy radical, such as (C₁-C₆)-alkyl, (C₂-C₆)-alkenyl, (C₂-C₆)-alkynyl, (C₁-C₆)-alkoxy, (C₃-C₆)-alkenyloxy, (C₃-C₆)-alkynyloxy, where the 6 last-mentioned radicals may be substituted by one or more radicals, preferably from the group consisting of halogen, such as F, Cl, Br or I, and (C₁-C₃)-alkoxy,
R⁵ is H, halogen, such as F, Cl, Br, l, or a substituted or unsubstituted C₁-C₂₀-hydrocarbon radical or C₁-C₂₀-hydrocarbonoxy radical, such as (C₁-C₆)-alkyl, which may be substituted by one or more radicals from the group consisting of halogen, such as F, Cl, Br or l, and (C₁-C₃)-alkoxy, or (C₁-C₅)-alkoxy which may be substituted by one or more radicals from the group consisting of halogen (F, Cl, Br, l) and (C₁-C₃)-alkoxy,
R⁶ and R^{6'} are identical or different and are H or a substituted or unsubstituted C₁-C₂₀-hydrocarbon radical, such as C₁-C₆-alkyl (for example Me, Et, ⁿPr, ⁱPr, ^{c}Pr), where R⁶ and R^{6'} may form an unsubstituted or substituted ring,
R⁷ is H, halogen, such as F, Cl, Br or l, OH, NR^{x}R^{y}, in which R^{x} and R^{y} are H or (C₁-C₃)-alkyl, or R⁷ is N-(C₁-C₃)-alkyl-N-acylamino or N-acylamino or a substituted or unsubstituted C₁-C₂₀-hydrocarbon radical or hydrocarbonoxy radical, such as (C₁-C₃)-alkyl, (C₁-C₃)-haloalkyl, halogen, (C₁-C₃)-alkyl-(N-(C₁-C₃)-alkyl-N-acylamino), (C₁-C₃)-alkyl-(N-acylamino) or (C₁-C₃)alkoxy,
R^{6''} is a substituted or unsubstituted C₁-C₂₀-hydrocarbon radical, such as substituted or unsubstituted (C₁-C₆)-alkyl, substituted or unsubstituted (C₃-C₆)-alkenyl, substituted or unsubstituted (C₃-C₆)-cycloalkyl, substituted or unsubstituted (C₃-C₇)-alkynyl, substituted or unsubstituted (C₄-C₈)-cycloalkylalkyl,
R^{7'} is H, halogen, such as F, Cl, Br or I, OH, NR^{x}R^{y}, in which R^{x} and R^{y} are H or (C₁-C₃)-alkyl, or R^{7'} is N-(C₁-C₃)-alkyl-N-acylamino, N-acylamino or a substituted or unsubstituted C₁-C₂₀-hydrocarbon radical or C₁-C₂₀-hydrocarbonoxy radical, such as (C₁-C₃)-alkyl, (C₁-C₃)-haloalkyl, (C₁-C₃)-alkyl-(N-(C₁-C₃)-alkyl-N-acylamino),(C₁-C₃)alkyl-(N-acylamino) or (C₁-C₃)-alkoxy,
R^{6'"} is halogen, such as F, Cl, Br or l, or a substituted or unsubstituted C₁-C₂₀-hydrocarbon-containing radical, such as (C₁-C₆)-alkyl, which may be substituted by one or more radicals from the group consisting of halogen (F, Cl, Br, l) and (C₁-C₃)-alkoxy, (C₁-C₆)-alkoxy which may be substituted by one or more radicals from the group consisting of halogen (F, Cl, Br, l) or (C₁-C₃)-alkoxy, substituted or unsubstituted alkoxycarbonyl, substituted or unsubstituted dialkylaminocarbonyl, substituted or unsubstituted (C₁-C₆)-alkylsulfonyl, (C₁-C₆)-mono- or -dialkylamino, N-(C₁-C₆)-alkyl-N-acylamino or N-acylamino,
R^{7"} is H, halogen, such as F, Cl, Br, l, OH, NR^{x}R^{y}, in which R^{x} and R^{y} are H or (C₁-C₃)-alkyl, or R^{7"} is a substituted or unsubstituted C₁-C₂₀-hydrocarbon radical or hydrocarbonoxy radical, such as (C₁-C₆)-alkyl, (C₁-C₆)-haloalkyl, (C₁-C₆)-alkoxy or (C₁-C₆)-haloalkoxy,
M⁺ is a quaternary phosphonium ion or a tertiary sulfonium ion,
X is substituted or unsubstituted (C₁-C₆)-alkyl, substituted or unsubstituted (C₁-C₆)-alkoxy, halogen, such as F, Cl, Br or I, substituted or unsubstituted (C₁-C₆)-mercaptoalkyl or (C₁-C₃)-mono- or (C₁-C₃)-dialkylamino,
Y is substituted or unsubstituted (C₁-C₆)-alkyl, substituted or unsubstituted (C₁-C₆)-alkoxy, halogen, such as F, Cl, Br or l, substituted or unsubstituted (C₁-C₆)-mercaptoalkyl or (C₁-C₃)-mono- or (C₁-C₃)-dialkylamino, and
Z is C-halogen, such as CF, CCI, CBr or Cl, CH or N.

4. A formulation as claimed in one or more of claims 1 to 3, comprising one or more agrochemicals which are different from the sulfonylurea salt defined in claim 1, such as herbicides, fungicides, insecticides, growth regulators, safeners, fertilizers.

5. A formulation as claimed in one or more of claims 1 to 4, comprising a wetting agent having bioactivating properties or a mixture of different wetting agents having bioactivating properties.

6. A formulation as claimed in one or more of claims 1 to 5, comprising a pH-stabilizing substance or substance mixture.

7. A formulation as claimed in one or more of claims 1 to 6, comprising a substance or a substance mixture having antifoam properties.

8. A formulation as claimed in one or more of claims 1 to 7, comprising a substance or a substance mixture which acts as acid scavenger.

9. A formulation as claimed in one or more of claims 1 to 8, comprising a substance or a substance mixture which acts as water scavenger.

10. A formulation as claimed in one or more of claims 1 to 9, comprising a substance or a substance mixture which acts as crystallization inhibitor.

11. A formulation according to one or more of claims 1 to 10, comprising a surfactant or surfactant mixture.

12. A formulation as claimed in one or more of claims 1 to 11, comprising in general 00.1-70.0% by weight of one or more phosphonium or sulfonium salts of sulfonylureas, in general 5.0-95.0% by weight of a polar and/or hydrophobic solvent, in general 2.0-40.0% by weight of a mixture of anionic and nonionic surfactants or a mixture of cationic and nonionic surfactants.

13. The use of the formulation as claimed in one or more of claims 1 to 12 as herbicidal or plant-growth-regulating composition.

14. A compound of the formula (Ia) as defined in claim 3.

15. A compound of the formula (la) as claimed in claim 14, in which
R¹ is H or Me,
R² is (C₁-C₃)-alkyl or (C₁-C₃)-haloalkyl, in particular Me and Et,
R³ is (C₁-C₃)-alkyl or (C₁-C₃)-haloalkyl, in particular Me and Et,
R⁴ is (C₁-C₆)-alkyl, (C₁-C₆)-haloalkyl or (C₁-C₆)-alkoxy, in particular Me, Et, OMe, OEt or CF₃,
R⁵ is H, halogen, such as F, Cl, Br or l, OMe, OEt, Me, CF₃, where the radicals R⁵ in the formula (III) which are different from hydrogen are preferably located in the 5-position on the phenyl ring,
R⁶ and R^{6'} are identical or different C₁-C₆-alkyl radicals, preferably R⁶ = Me, R^{6'} = Me; R⁶ = Me, R^{6'} = Et and R^{6'} = Et, R⁶ = Et,
R⁷ is H, Me, Et, CF₃, F, Cl, Br, I, N[(C₁-C₃)-alkyl]-R⁸, NH-R⁹, CH₂N[(C₁-C₃)-alkyl]-R¹⁰, CH²NH-R¹¹, CH₂CH₂N[(C₁-C₃)-alkyl]-R¹², CH₂CH₂NH-R¹³, where the radicals R⁷ in the formula (IVa) which are different from hydrogen are preferably located in the 5-position on the phenyl ring and the radicals R⁸ to R¹³ are H, (C₁-C₆)-alkyl, (C₁-C₆)-haloalkyl, CHO, COO(C₁-C₆)-alkyl, COO(C₁-C₆)-haloalkyl, SO₂-(C₁-C₆)-alkyl, SO₂-(C₁-C₆)-haloalkyl, CO-(C₁-C₆)-alkyl or CO-(C₁-C₆)-haloalkyl,
R^{6"} is Me, Et, ⁿPr, ⁱPr, ^{c}Pr, ⁿBu, ⁱBu, ^{s}Bu, ^{t}Bu, ^{c}Bu, in particular Me or Et,
R^{7'} is H, Me, Et, CF₃, F, Cl, Br, l, N[(C₁-C₃)-alkyl]-R⁸, NH-(C₁-C₃)-alkyl, CH₂N[(C₁-C₃)-alkyl]-R¹⁰, CH₂NH-R , CH₂CH₂N[(C₁-C₃)-alkyl]-R¹², CH₂CH₂NH-R¹³, where the radicals R⁷ in the formula (IVb) which are different from hydrogen are preferably located in the 5-position on the phenyl ring and the radicals R⁸ and R¹⁰ to R¹³ are H, (C₁-C₆)-alkyl, (C₁-C₆)-haloalkyl, CHO, COO(C₁-C₆)-alkyl, COO(C₁-C₆)-haloalky), SO₂-(C₁-C₆)-alkyl, SO₂-(C₁-C₆)-haloalkyl, CO-(C₁-C₆)-alkyl or CO-(C₁-C₆)-haloalkyl,
R^{6"'} is Me, Et, Pr, CH₂CH₂CF₃, OMe, OEt, OⁱPr, OCH₂CH₂Cl, F, Cl, COOMe, COOEt, COOⁿPr, COOⁱPr, CONMe₂, CONEt₂, SO₂Me, SO₂Et, SO₂ⁱPr, unsubstituted or substituted NH-(C₁-C₆)-alkyl-acyl, unsubstituted or substituted NH-(C₃-C₇)cycloalkyl, unsubstituted or substituted (C₄-C₈)-cycloalkylalky), unsubstituted or substituted N-(C₃-C₇)-cycloalkyl-aryl, unsubstituted or substituted N-(C₄-C₈)-cycloalkylalkyl-acyl, preferably N-(C₁-C₆)-alkyl-CHO, N-(C₁-C₆)-alkyl-CO-R, N-(C₁-C₆)-alkyl-SO₂R, NH-CHO, NH-CO-R, NHSO₂R, where the radicals R are (C₁-C₆)-(halo)-alkyl, (C₁-C₆)-(halo)-alkoxy, (C₁-C₃)-alkoxy-(C₁-C₆)-alkyl, (C₁-C₃)-alkoxy-(C₁-C₆)-alkoxy or mono- and di-(C₁-C₆)-alkylamino,
R^{7''} is H, F, Cl, Me, Et, CF₃, OCH₃, OEt, OCH₂CF₃, preferably H,
M⁺ is [SR¹⁸R¹⁹R²⁰]⁺ or [PR²¹R²²R²³R²⁴]⁺, where
R¹⁸ to R²⁵ are identical or different from one another and are substituted or unsubstituted (C₁-C₃₀)-alkyl, substituted or unsubstituted (C₁-C₁₀)-alkyl-(hetero)aryl, substituted or unsubstituted (C₃-C₃₀)-(oligo)alkenyl, substituted or unsubstituted (C₃-C₁₀)-(oligo)alkenyl-(hetero)ary), substituted or unsubstituted (C₃-C₃₀)-(oligo)alkynyl, substituted or unsubstituted (C₃-C₁₀)-(oligo)alkynyl-(hetero)aryl, substituted or unsubstituted (hetero)aryl, and where two radicals R¹⁸/R¹⁹ R²¹ /R²² and R²³/R²⁴ together may form an unsubstituted or substituted ring,
X is Me, Et, Pr, ⁱPr, CF₃, CCl₃, OMe, OEt, OⁱPr, OCHCl₂, OCH₂CCl₃, OCH₂CF₃, F, Cl, Br, SMe, SEt, NHMe, NMe₂, NHEt, preferably OMe, OEt, Me, Cl
Y is Me, Et, Pr, ⁱPr, CF₃, CCl₃, OMe, OEt, OⁱPr, OCHCl₂, OCH₂CCl₃, OCH₂CF₃, F, Cl, Br, SMe, SEt, NHMe, NMe₂, NHEt, preferably OMe, OEt, Me, Cl
and
Z is CH or N.

16. The use of one or more compounds of the formula (la) as claimed in claim 14 or 15 as herbicidal or plant-growth-regulating agent.

17. A process for preparing a compound of the formula (la) as claimed in claim 14 or 15.

18. The use of a compound of the formula (XVIII)
R-O(EO)_{w}(PO)ₓ(EO)_{y}(PO)_{z}⊖M⊕ (XVIII)
in which
w, x, y and z independently of one another are integers from 0 to 50, R is an unsubstituted or substituted C₈-C₄₀-hydrocarbon,
EO is an ethoxy unit,
PO is a propoxy unit and
M⊕ is a phosphonium or sulfonium ion,
for preparing an agrochemical formulation comprising components a) and b) as claimed in claim 1.

## Revendications

1. Formulation, contenant
a) au moins un sel de phosphonium ou de sulfonium d'une sulfonylurée, dans lequel le cation phosphonium et sulfonium du sel présente au moins un substituant, qui est différent de l'hydrogène, et
b) des adjuvants et additifs usuels.

2. Formulation selon la revendication 1, contenant au moins un sel de phosphonium quaternaire ou au moins un sel de sulfonium tertiaire d'une sulfonylurée.

3. Formulation selon la revendication 1 ou 2, contenant au moins une sulfonylurée de formule (Ia) 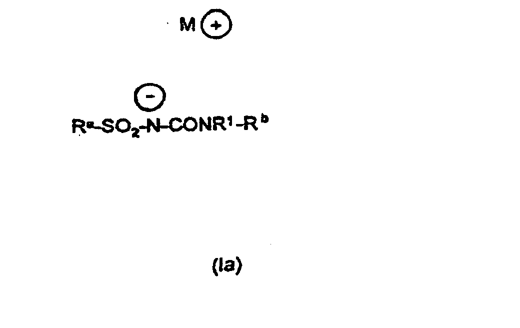 dans laquelle R^{a} est un groupe aliphatique, aromatique ou hétérocyclique substitué ou un groupe attracteur d'électrons comme un groupe sulfonamide, de préférence
R^{a} est un groupe de formule II-IVc, 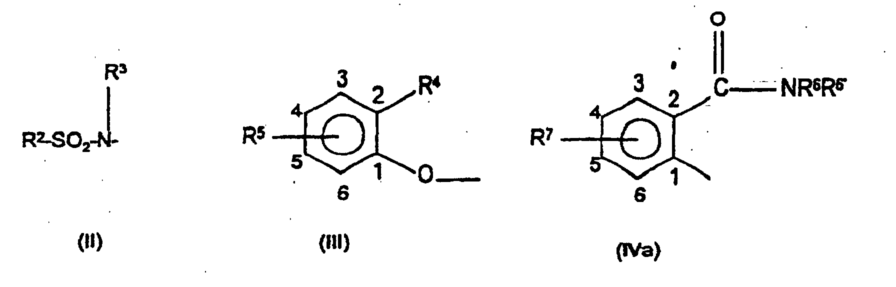 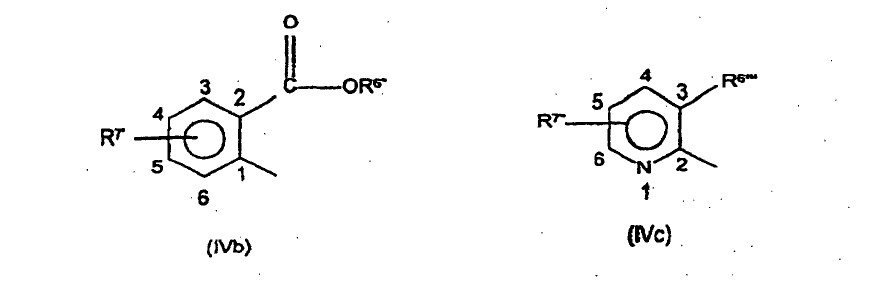 R^{b} est un groupe hétérocyclique, de préférence un groupe hétérocyclique azoté, et mieux encore un groupe hétérocyclique ayant 2 ou 3 atomes d'azote dans le cycle, de manière préférée un groupe 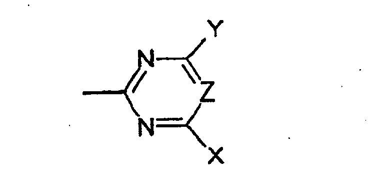
R¹ est H ou un groupe hydrocarboné en C₁ à C₁₀ comme un alkyle en C₁ à C₆,
R² est un groupe hydrocarboné en C₁ à C₂₀ substitué ou non substitué comme un alkyle en C₁ à C₆ substitué ou non substitué, alcényle en C₂ à C₆ substitué ou non substitué, alcynyle en C₂ à C₆ substitué ou non substitué, cycloalkyle en C₃ à C₇ substitué ou non substitué,
R³ est un groupe hydrocarboné en C₁ à C₂₀ substitué ou non substitué comme un alkyle en C₁ à C₆ substitué ou non substitué, alcényle en C₂ à C₆ substitué ou non substitué, alcynyle en C₂ à C₆ substitué ou non substitué, cycloalkyle en C₃ à C₇ substitué ou non substitué,
R⁴ est un halogène comme F, Cl, Br ou I ou un groupe hydrocarboné en C₁ à C₂₀ ou oxyhydrocarboné en C₁ à C₂₀ substitué ou non substitué comme un alkyle en C₁ à C₆, alcényle en C₂ à C₆, alcynyle en C₂ à C₆, alcoxy en C₂ à C₆, alcényloxy en C₃ à C₆, alcynyloxy en C₃ à C₆, dans lequel les 6 derniers groupes mentionnés peuvent être substitués par un ou plusieurs groupes choisis de préférence parmi un halogène comme F, Cl, Br ou I ou un alcoxy en C₁ à C₃,
R⁵ est H, un halogène comme F, Cl, Br, I ou un groupe hydrocarboné en C₁ à C₂₀ ou oxyhydrocarboné en C₁ à C₂₀ substitué ou non substitué comme un alkyle en C₁ à C₆ qui peut être substitué par un ou plusieurs groupes choisis parmi un halogène comme F, Cl, Br ou I ou alcoxy en C₁ à C₃, ou alcoxy en C₁ à C₅ qui peut être substitué par un ou plusieurs groupes choisis parmi un halogène (F, Cl, Br, I) ou un alcoxy en C₁ à C₃,
R⁶ et R^{6'}, identiques ou différents, sont H ou un groupe hydrocarboné en C₁ à C₂₀ substitué ou non substitué comme un alkyle en C₁ à C₆ (par exemple Me, Et, ⁿPr, ⁱPr, ^{c}Pr), R⁶ et R^{6'} pouvant former un cycle, qui est substitué ou non substitué,
R⁷ est H, un halogène comme F, Cl, Br ou I, OH, NR^{x}R^{y}, dans lequel R^{x} et R^{y} sont H ou un alkyle en C₁ à C₃, ou R⁷N-alkyle en C₁ à C₃-N-acylamino ou N-acylamino ou un groupe hydrocarboné ou un groupe oxyhydrocarboné en C₁ à C₂₀ substitué ou non substitué comme un alkyle en C₁ à C₃, halogénoalkyle en C₁ à C₃, halogène, alkyle en C₁ à C₃-(N-alkyle en C₁ à C₃)-N-acylamino, alkyle en C₁ à C₃(N-alkyle en C₁ à C₃-N-acylamino), alkyle en C₁ à C₃-(N-acylamino) ou alcoxy en C₁ à C₃,
R⁶'' est un groupe hydrocarboné en C₁ à C₂₀ substitué ou non substitué comme un alkyle en C₁ à C₆ substitué ou non substitué, alcényle en C₁ à C₆ substitué ou non substitué, cycloalkyle en C₃ à C₆ substitué ou non substitué, alcynyle en C₃ à C₇ substitué ou non substitué ou cycloalkylàlkyle en C₄ à C₈ substitué ou non substitué,
R^{7'} est H, un halogène comme F, Cl, Br ou I, OH, NR^{x}R^{y}, dans lequel R^{x} et R^{y} sont H ou un alkyle en C₁ à C₃, ou R^{7'}N-alkyle en C₁ à C₃-N-acylamino, N-acylamino ou un groupe hydrocarboné en C₁ à C₂₀ ou un groupe oxy-hydrocarboné en C₁ à C₂₀ substitué ou non substitué comme un alkyle en C₁ à C₃, halogénoalkyle en C₁ à C₃, alkyle en C₁ à C₃-(N-alkyle en C₁ à C₃)-alkyl-N-acylamino, alkyle en C₁ à C₃-(N-acylamino) ou alcoxy en Ci à C₃,
R^{6'''} est un halogène comme F, Cl, Br ou I ou un groupe. hydrocarboné en C₁ à C₂₀ substitué ou non substitué comme un alkyle en C₁ à C₃ qui peut être substitué par un ou plusieurs groupes choisis parmi un halogène (F, Cl, Br, I) ou alcoxy en C₁ à C₃, alcoxy en C₁ à C₆, qui peut être substitué par un ou plusieurs groupes choisis parmi un halogène (F, Cl, Br, I) ou alcoxy en C₁ à C₃, alcoxycarbonyle substitué ou non substitué, dialkylamino-carbonyle substitué ou non substitué, alkylsulfonyle en C₁ à C₆ substitué ou non substitué, mono- ou di-alkyle en C₁ à C₆-amino, N-alkyle en C₁ à C₆-N-acylamino ou N-acylamino,
R^{7"} est H, un halogène comme F, Cl, Br, I, OH, NR^{x}R^{y}, dans lequel R^{x} et R^{y} sont H ou un alkyle en C₁ à C₃, ou R^{7"} est un groupe hydrocarboné ou un groupe oxyhydrocarboné en C₁ à C₂₀ substitué ou non substitué comme un alkyle en C₁ à C₆, halogéno-alkyle en C₁ à C₆, alcoxy en C₁ à C₆ ou halogéno-alcoxy en C₁ à C₆,
M⁺ est un ion phosphonium quaternaire ou un ion sulfonium tertiaire,
X est un alkyle en C₁ à C₆ substitué ou non substitué, alcoxy en C₁ à C₆ substitué ou non substitué, halogène comme F, Cl, Br ou I, mercapto-alkyle en C₁ à C₆ ou mono- ou di-alkyle en C₁ à C₃-amino substitué ou non substitué,
Y est un alkyle en C₁ à C₆ substitué ou non substitué, alcoxy en C₁ à C₆ substitué ou non substitué, halogène comme F, Cl, Br ou I, mercaptoalkyle en C₁ à C₆ ou mono- ou di-alkyle en C₁ à C₃-amino substitué ou non substitué, et
Z est C-halogène comme CF, CCl, CBr ou CI, CH ou N.

4. Formulation selon une ou plusieurs des revendications 1 à 3, contenant un ou plusieurs composés agrochimiques différents du sel de sulfonylurée défini à la revendication 1 comme des herbicides, des fongicides, des insecticides, des régulateurs de croissance, des antidotes, des engrais.

5. Formulation selon une ou plusieurs des revendications 1 à 4, contenant un agent mouillant qui présente des caractéristiques bioactivantes ou un mélange de différents agents mouillants, qui présente des caractéristiques bioactivantes.

6. Formulation selon une ou plusieurs des revendications 1 à 5, contenant une substance ou un mélange de substances stabilisant la valeur de pH.

7. Formulation selon une ou plusieurs des revendications 1 à 6, contenant une substance ou un mélange de substances avec des caractéristiques antimousse.

8. Formulation selon une ou plusieurs des revendications 1 à 7, contenant une substance ou un mélange de substances qui agit comme fixateur d'acide.

9. Formulation selon une ou plusieurs des revendications 1 à 8, contenant une substance ou un mélange de substances qui agit comme fixateur d'eau.

10. Formulation selon une ou plusieurs des revendications 1 à 9, contenant une substance ou un mélange de substances qui agit comme inhibiteur de cristallisation.

11. Formulation selon une ou plusieurs des revendications 1 à 10, contenant un agent tensio-actif ou un mélange d'agents tensio-actifs.

12. Formulation selon une ou plusieurs des revendications 1 à 11, contenant un général de 0,01 à 70,0 % en poids d' un ou de plusieurs sels de phosphonium ou de sulfonium de sulfonylurées, en général de 5,0 à 95,0 % en poids d'un solvant polaire et/ou hydrophobe, en général 2,0 à 40,0 % en poids d'un mélange d'agents tensio-actifs anioniques et non ioniques ou un mélange d'agents tensio-actifs cationiques et non ioniques.

13. Utilisation de la formulation selon une ou plusieurs des revendications 1 à 12 comme agent herbicide ou régulateur de croissance des plantes.

14. Composé de formule (Ia) comme défini à la revendication 3.

15. Composé de formule (Ia) selon la revendication 14, dans laquelle
R¹ représente H ou Me,
R² représente un alkyle en C₁ à C₃ ou halogénoalkyle en C₁ à C₃, en particulier Me et Et,
R³ représente un alkyle en C₁ à C₃ ou halogénoalkyle en C₁ à C₃, en particulier Me et Et,
R⁴ représente un alkyle en C₁ à C₆, halogénoalkyle en C₁ à C₆ ou alcoxy en C₁ à C₆, en particulier Me, Et, OMe, OEt ou CF₃,
R⁵ représente H, un halogène comme F, Cl, Br ou I, OMe, OEt, Me, CF₃, dans lequel les groupes R⁵ dans la formule (III) différents de l'hydrogène se trouvent de préférence en position 5 du cycle phényle,
R⁶ et R^{6'} sont, identiques ou différents, un groupe alkyle en C₁ à C₆, de préférence R⁶ = Me, R^{6'} = Me ; R⁶ = Me, R^{6'} = Et et R^{6'} = Et, R⁶ = Et,
R⁷ représente H, Me, Et , CF₃, F, Cl, Br, I, N (alkyle en C₁ à C₃) -R⁸, NH-R⁹, CH₂N (alkyle en C₁ à C₃)-R¹⁰, CH₂NH-R¹¹, CH₂CH₂N (alkyle en C₁ à C₃)-R¹², CH₂CH₂NH-R¹³, dans lesquels les groupes R⁷ différents de l'hydrogène dans la formule (IVa) sont situés de préférence en position 5 sur le cycle phényle, et les groupes R⁸ à R¹³ représentent H, un alkyle en C₁ à C₆, halogénoalkyle en C₁ à C₆, CHO, COO-alkyle en C₁ à C₆, COO-halogénoalkyle en C₁ à C₆, SO₂-alkyle en C₁ à C₆, SO₂-halogénoalkyle en C₁ à C₆ ou CO-halogénoalkyle en C₁ à C₆,
R^{6''} représente Me, Et, ⁿPr, ⁱPr, ^{c}Pr, ⁿBu, ⁱBu, ^{s}Bu, ^{t}Bu, ^{c}Bu, en particulier Me ou Et,
R^{7'} représente H, Me, Et, F, CF₃, Cl, Br, I, N (alkyle en C₁ à C₃) -R⁸ , NH (alkyle en C₁ à C₃) , CH₂N (alkyle en C₁ à C₃)-R¹⁰, CH₂NH-R¹¹, CH₂CH₂N (alkyle en C₁ à C₃)-R¹², CH₂CH₂NH-R¹³, dans lesquels les groupes R^{7'} différents de l'hydrogène dans la formule (IVb) sont situés de préférence en position 5 sur le cycle phényle, et les groupes R⁸ et R¹⁰ à R¹³ représentent H, un alkyle en C₁ à C₆, halogénoalkyle en C₁ à C₆, CHO, COO-alkyle en C₁ à C₆, COO-halogénoalkyle en C₁ à C₆, SO₂-alkyle en C₁ à C₆, SO₂-halogénoalkyle en C₁ à C₆, CO-alkyle en C₁ à C₆ ou CO-halogénoalkyle en C₁ à C₆,
R^{6'''} représente Me, Et, Pr, CH₂CH₂CF₃, OMe, OEt, OⁱPr, OCH₂CH₂Cl, F, Cl, COOMe, COOEt, COOⁿPr, COOⁱPr, CONMe₂, CONEt₂, SO₂Me, SO₂Et, SO₂ⁱPr, NH-alkyle en C₁ à C₆-acyle substitué ou non substitué, NH-cycloalkyle en C₃ à C₇ substitué ou non substitué, cycloalkylalkyle en C₄ à C₈ substitué ou non substitué, N-cycloalkyle en C₄ à C₇-aryle substitué ou non substitué, N-cycloalkylalkyle en C₄ à C₈-acyle substitué ou non substitué, de préférence N-alkyle en C₁ à C₆-CHO, N-alkyle en C₁ à C₆-CO-R, N-alkyle en C₁ à C₆-SO₂R, NH-CHO, NH-CO-R, NH-SO₂-R, dans lesquels les groupes R sont un (halogéno)-alkyle en C₁ à C₆, (halogéno) alcoxy en C₁ à C₆, alcoxy en C₁ à C₃-alkyle en C₁ à C₆, alcoxy en C₁ à C₃-alcoxy en C₁ à C₆ ou mono- et di-alkyle en C₁ à C₆-amino,
R^{7"} représente H, F, Cl, Me, Et, CF₃, OCH₃, OEt, OCH₂CF₃, de préférence H,
M⁺ est [SR¹⁸R¹⁹R²⁰]⁺ ou [PR²¹R²²R²³R²⁴]⁺, dans lesquels
R¹⁸ à R²⁵ sont, identiques ou différents, un alkyle en C₁ à C₃₀ substitué ou non substitué, alkyle en C₁ à C₁₀-(hétéro)aryle substitué ou non substitué, (oligo)-alcényle en C₃ à C₃₀ substitué ou non substitué, (oligo)-alcényle en C₃ à C₁₀-(hétéro)aryle substitué ou non substitué, (oligo)-alcynyle en C₃ à C₁₀ substitué ou non substitué, (oligo)alcynyle en C₃ à C₁₀-(hétéro)aryle substitué ou non substitué, (hétéro)aryle substitué ou non substitué, et deux groupes R¹⁸/R¹⁹, R²¹/R²² et R²³/R²⁴ pouvant former ensemble un cycle substitué ou non substitué,
X représente Me, Et, Pr, ⁱPr, CF₃, CCl₃, OMe, OEt, OⁱPr, OCHCl₂, OCH₂CCl₃, OCH₂CF₃, F, Cl, Br, SMe, SEt, NHMe, NMe₂, NHEt, de préférence OMe, OEt, Me, Cl,
Y représente Me, Et, Pr, ⁱPr, CF₃, CCl₃, OMe, OEt, OⁱPr, OCHCl₂, OCH₂CCl₃, OCH₂CF₃, F, Cl, Br, SMe, SEt, NHMe, NMe₂, NHEt, de préférence OMe, OEt, Me, Cl,
et
Z représente CH et N.

16. Utilisation d'un ou de plusieurs composés de formule (Ia) selon la revendication 14 ou 15 comme agent herbicide ou de régulation de croissance des plantes.

17. Procédé pour la préparation d'un composé de formule (Ia) selon la revendication 14 ou 15.

18. Utilisation d'un composé de formule (XVIII)
R-O(EO)_{w}(PO)ₓ(EO)_{y}(PO)_{z} ⁻ M⁺ (XVIII)
dans laquelle
w, x, y et z sont indépendamment les uns des autres un nombre entier de 0 à 50,
R est un groupe hydrocarboné en C₈ à C₄₀ substitué ou non substitué,
EO est un motif éthoxy,
PO est un motif propoxy et
M⁺ est un ion phosphonium ou sulfonium,
pour la préparation d'une formulation agrochimique, contenant des composants a) et b) selon la revendication 1.
